# EUROPEAN PATENT SPECIFICATION

(11) **EP 2 431 895 B1**
(45) Date of publication and mention of the grant of the patent: **26.07.2017**
(21) Application number: 11179960.7
(22) Date of filing: 02.09.2011
(51) Int. Cl.: G06F 17/30

(54) **Transparent display device and method for providing information using the same**
Transparente Anzeigevorrichtung und Verfahren zur Bereitstellung von Informationen damit
Dispositif d'affichage transparent et procédé de fourniture d'informations l'utilisant

(30) Priority: 16.09.2010 KR 20100091194; 16.09.2010 KR 20100091195
(43) Date of publication of application: 21.03.2012
(73) Proprietor: LG Electronics Inc., Yeongdeungpo-Gu Seoul 07336 (KR)
(72) Inventor: Park, Heeyeon, 153-801 SEOUL (KR); Joo, Yeonjoo, 153-801 SEOUL (KR); Park, Sunju, 153-801 SEOUL (KR)
(74) Representative: Cabinet Plasseraud

(56) References cited:
- AZUMA R ET AL: "Recent advances in augmented reality", IEEE COMPUTER GRAPHICS AND APPLICATIONS, IEEE SERVICE CENTER, NEW YORK, NY, US, vol. 21, no. 6, 1 November 2001 (2001-11-01), pages 34-47, XP011093930, ISSN: 0272-1716, DOI: 10.1109/38.963459
- RONALD T AZUMA: "A Survey of Augmented Reality", PRESENCE, CAMBRIDGE, MA, US, 1 August 1997 (1997-08-01), pages 1-48, XP002254668, ISSN: 1054-7460
- AJANKI A ET AL: "Contextual information access with Augmented Reality", MACHINE LEARNING FOR SIGNAL PROCESSING (MLSP), 2010 IEEE INTERNATIONAL WORKSHOP ON, IEEE, PISCATAWAY, NJ, USA, 29 August 2010 (2010-08-29), pages 95-100, XP031765933, ISBN: 978-1-4244-7875-0
- MATTHIAS BALDAUF ET AL: "KIBITZER", 20100402; 20100402 - 20100403, 2 April 2010 (2010-04-02), pages 1-5, XP058220787, DOI: 10.1145/1785455.1785464 ISBN: 978-1-60558-825-4
- FEINER S ET AL: "A touring machine: prototyping 3D mobile augmented reality systems for exploring the urban environment", WEARABLE COMPUTERS, 1997. DIGEST OF PAPERS., FIRST INTERNATIONAL SYMPO SIUM ON CAMBRIDGE, MA, USA 13-14 OCT. 1997, LOS ALAMITOS, CA, USA,IEEE COMPUT. SOC, US, 13 October 1997 (1997-10-13), pages 74-81, XP032145092, DOI: 10.1109/ISWC.1997.629922 ISBN: 978-0-8186-8192-9

## Description

### BACKGROUND OF THE DISCLOSURE

### Field of the Disclosure

The present invention relates to a transparent display device and a method for providing information, more particularly, to a transparent display device and a method which can provide information via a transparent display.

### Discussion of the Related Art

Electronic equipment including broadcasting receivers, personal computers, notebooks, mobile phones and the like may be configured to perform a variety of functions. Such a variety of functions may be a broadcasting receiving function, data and audio communication function, a motion picture taking function by using cameras, an audio storing function, a music file playing function via a speaker system, an image or video displaying function and the like. Some terminals may further have an additional game implementing function.

Moreover, as image technology and transparent electron device technology has been developing recently, transparent display panels enabling a rear object seen and images displayed simultaneously have been studied vibrantly and electron devices use the transparent display panels to display images and data as display panel. Such the transparent display may be an organic light emitting panel or plasma panel which uses self-emission.

### SUMMARY OF THE DISCLOSURE

Accordingly, the present invention is directed to a transparent display device and a method for providing information using the same.

An object of the present invention is to provide a transparent display device and a method for providing information capable of providing information on an object selected by a user out of objects seen via a transparent display.

Another object of the present invention is to provide a transparent display device and a method for providing information capable of providing information on a corresponding object, when an object corresponding to a specific condition is seen via a transparent display.

A further object of the present invention is to provide a transparent display device and a method for providing information capable of providing information on a background seen via a transparent display.

A still further object of the present invention is to provide a transparent display device and a method for providing information capable of acquiring information on a region corresponding to an area of a background seen via a transparent display and of providing a communication service based on the acquired information.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for providing information on an object seen via a transparent display is as defined in claim 1, with embodiments further defined in claims 2-7.

A mark to highlight a shape of the detected object seen on the transparent display may be displayed. That is, an outline of the shape may be displayed in a specific color, or an outline of the shape or an area of the shape may be displayed to be turned one-and-off.

The acquiring step may include a step of searching information on the object in database stored in a storage.

The acquiring step may include steps of: detecting information on the object in data stored in a storage; requesting a server to search information on the object if the searching is failed in the searching step; and receiving a search result from the server.

In another aspect of the present invention, a transparent display device is as defined in claim 8, with embodiments further defined in claims 9-11.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

In the drawings:
FIG. 1 is a diagram illustrating a configuration of an object information providing system according to an exemplary embodiment of the present invention;
FIG. 2 is a diagram illustrating a situation in which information on an object indicated by object selection information is displayed;
FIGS. 3a to 3c are diagrams illustrating a method for inputting object selection information according to an exemplary embodiment of the present invention;
FIG. 4 is a diagram illustrating a method for inputting object selection information according to another embodiment;
FIG. 5 is a diagram illustrating a situation in which information on an object indicated by object selection information is displayed according to another embodiment;
FIGS. 6a to 6d are diagrams illustrating screens displaying a mark to highlight a shape of an object indicated by object selection information;
FIG. 7 is a diagram illustrating a screen displaying information on the detected object;
FIG. 8 is a block view illustrating a configuration of a transparent display device according to an exemplary embodiment of the present invention;
FIG. 9 is a block view illustrating a configuration of a controller provided in the transparent display device according to an exemplary embodiment of the present invention;
FIG. 10 is a flowchart illustrating a process of a method for detecting an object according to an exemplary embodiment of the present invention;
FIGS. 11 a to 11e are diagrams illustrating screens displaying information on the detected object and a recognized gesture;
FIG. 12 is a diagram illustrating a screen displaying a gesture configured to request to display the information on the detected object;
FIG. 13 is a flowchart illustrating a process of a method for detecting an object according to an exemplary embodiment;
FIG. 14 is a flowchart illustrating a process of a method for acquiring object information according to an exemplary embodiment of the present invention;
FIG. 15 is a flowchart illustrating a process of a method for acquiring object information according to another embodiment;
FIG. 16 is a flowchart illustrating a process of a method for detecting an object according to an exemplary embodiment of the present invention;
FIG. 17 is a block view illustrating a configuration of a transparent display device according to another embodiment of the present invention;
FIG. 18 is a diagram illustrating a diagram illustrating a configuration of a region information providing system according to an exemplary embodiment of the present invention;
FIG. 19 is a diagram illustrating a background seen via a transparent display;
FIGS. 20a to 20c are diagrams illustrating a method for inputting region selection information according to an embodiment;
FIG. 21 is a diagram illustrating a screen displaying a photographed image of an area of a background according to an embodiment;
FIG. 22 is a diagram illustrating a screen displaying a map for an area of the background according to an embodiment;
FIG. 23 is a diagram illustrating a screen displaying point information against a background of the map according to an embodiment;
FIG. 24 is a diagram illustrating a screen displaying a map for an area of a background according to another embodiment;
FIG. 25 is a flowchart illustrating a process of a method for providing region information according to an exemplary embodiment of the present invention;
FIGS. 26a to 26d are diagrams illustrating screens displaying a selected area of a background and a recognized gesture;
FIG. 27 is a flowchart illustrating a process of a method for recognizing an eye direction according to an exemplary embodiment; and
FIG. 28 is a flowchart illustrating a process of a method for providing region information according to another embodiment of the present invention.

### DESCRIPTION OF SPECIFIC EMBODIMENTS

Reference will now be made in detail to the specific embodiments of the present invention, examples of which are illustrated in the accompanying drawings. Wherever possible, the same reference numbers will be used throughout the drawings to refer to the same or like parts.

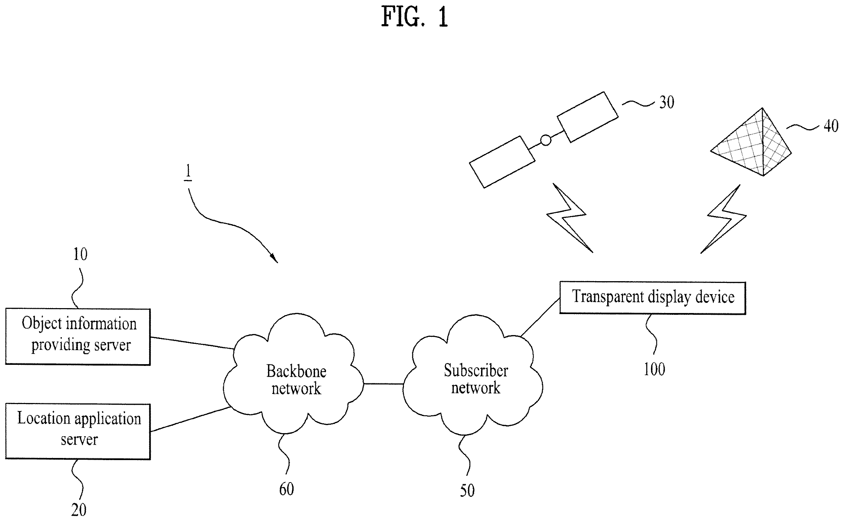

FIG. 1 is a diagram illustrating a configuration of an object information providing system according to an exemplary embodiment of the present invention.

In reference to FIG. 1, an object information providing system 1 according to the embodiment of the present invention includes an object information providing server 10, a location application server 20, a network 50 and 60 and a transparent display device 100.

The object information server 10 stores an object image, location information, information on an object, an object image, related information of the object image and the information on the object, and related information of the location information and the information on the object. Here, the object may include at least one of a human, an animal, a thing, a vehicle, a building or a natural object. The information on the object may include at least one of an object name, object kind information, object history information, object appearance information, object weight information, location information of the object or detailed explanation of the object. Here, the information on the object will be referenced to as 'object information' and an image of the imaged object will be referenced to as 'object image'.

The related information is information configured to map information onto information. For example, the related information may be a single table name in a relation database system. The object information providing server 10 may search object information mapped on a specific object image via the related information and it may search object information mapped onto the location information via the related information.

The object information providing server 10 may receive a search requesting signal from the transparent display device 100. Here, the search requesting signal may include at least one of an image of the detected object or location information of the detected object. The image of the detected object may be a picture imaged by the transparent display device 100 or an object image extracted from the imaged picture.

When the search requesting signal including the image of the detected object is received from the transparent display device 100, the object information providing server 10 may recognize a corresponding object from the received image and it may search information on the recognized object. The object information providing server 10 may transmit searched information on the object to the transparent display device 100. Here, the object information providing server 10 compares the received image with a stored object image, to recognize the object. In other words, the object information providing server 10 finds an object image which is identical to or the most similar to the object image included in the received images and it searches information on the recognized object based on the found object image and the stored related-information.

When receiving a search requesting signal including location information on the detected object from the transparent display device 100, the object information providing server 10 recognizes an object mapped onto the received location information and it searches information on the recognized object. The object information providing server 10 may transmit the searched information on the detected object to the transparent display device 100. Here, the object information providing server 10 may search information on the recognized object based on the received location information and the stored related-information.

When receiving a search requesting signal including the image of the detected object and location information thereon from the transparent display device 100, the object information providing server 10 recognizes a corresponding object based on the received image and location information of the object and it searches information on the recognized object. The object information providing server 10 may transmit the searched information to the transparent display device 100. Here, the object information providing server 10 may detect object information, corresponding to information on the object mapped onto the received location information, out of information on the object mapped onto the object image included in the received image as information on the recognized object.

The location application server 20 may provides the transparent display device 100 with a location based service (LBS). The location application server 20 may provide the transparent display device 100 with the location information on a specific object and a map and geographic information of a specific location.

The object information providing server 10, the location application server 20 and the transparent display device may be connected with a network. Here, the network may be an internet or intranet and a broadband convergence network (BCN) or Ultra broadband convergence network (uBCN).

The network may be configured of a backbone network 60 and a subscriber network 50. The backbone network 60 may be one or combination of one or combination of two out of X.25 network, Frame Relay network, ATM network, Multi Protocol Label Switching (MPLS) network and Generalized Multi Protocol Label Switching network (GMPLS). The subscriber network 50 may be one of Fiber to The Home (FTTH), Asymmetric Digital Subscriber Line (ADSL), Cable network, Wireless LAN (IEEE 802.11 B, IEEE 802.11A, IEEE 802.11 G and IEEE 802.11 N), Wireless Broadband (WIBro), Wimax and High Speed Downlink Packet Access (HSDPA). The transparent display device 100 may be connected with the subscriber network 50.

The transparent display device 100 receives object selection information and it detects an object indicated by the received object selection information from a background seen via the transparent display. The transparent display device displays information on the detected object.

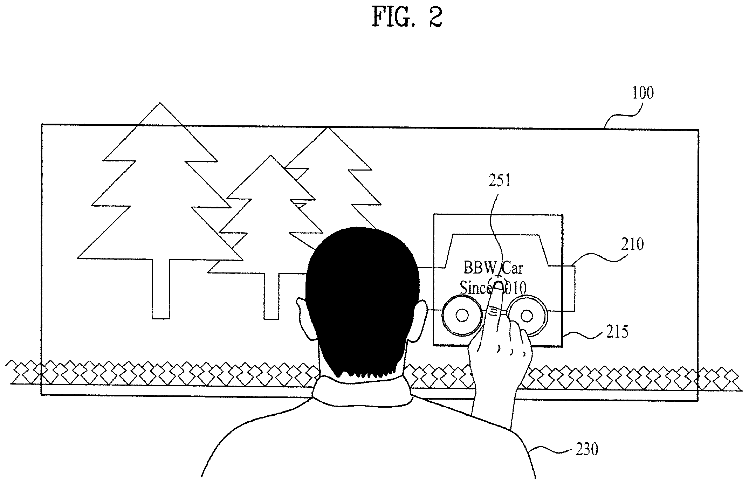

FIG. 2 is a diagram illustrating a situation in which information on an object indicated by object selection information is displayed according to an embodiment.

In reference to FIG. 2, if a human 230 inputs object selection information to select an object 210 seen via the transparent display, the transparent display device 100 may detect an object 210 indicated by the input object selection information. The transparent display device 100 may display information on the detected object 210 on the transparent display. Here, the input object selection information may be a signal configured to select a specific point 251 on a screen of the transparent display device 100. also, the object 210 indicated by the object selection information may be an object having a visible shape on the point 251 with respect to an eye direction of the person 230 seeing the selected point 251.

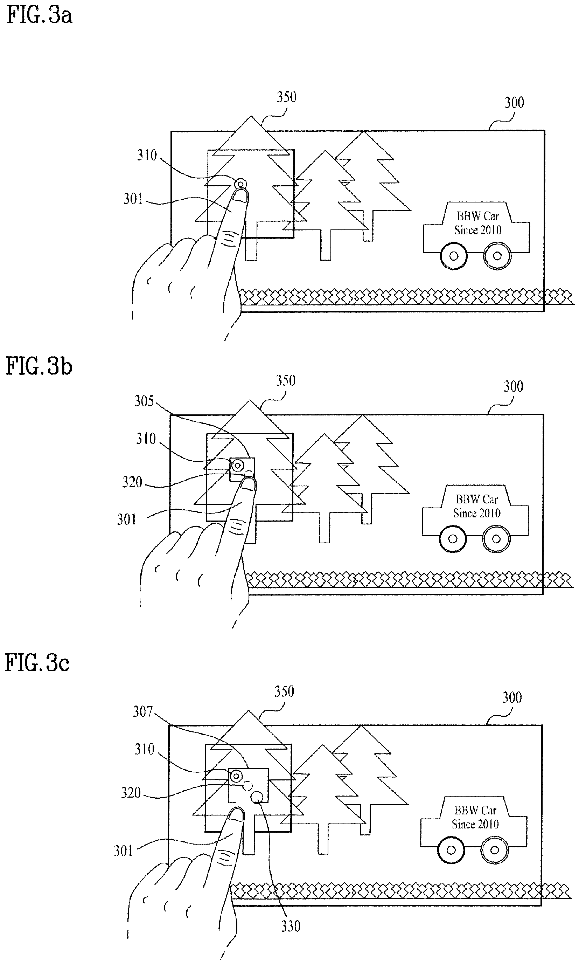

FIGS. 3a to 3c are diagrams illustrating a method for inputting object selection information according to an exemplary embodiment of the present invention.

In reference to FIGS. 3a to 3c, object selection information may be inputted via a gesture.

A variety of difference gestures may be usable. For example, the gesture may be a single point or multipoint gesture, a static or dynamic gesture, a continuous or segmented gesture, and/or the like. The single point gesture is a gesture performed according to a single touch point. For example, this gesture is performed according to single touch such as a single human finger, palm or stylus. The multipoint gesture is a gesture performed according to multiple points. For example, this gesture is performed according to plural touches such as plural human fingers, human fingers and palm, human fingers and stylus, plural styli and/or combination of them. The static gesture is a gesture having no motion and the dynamic gesture is a gesture having motion. The continuous gesture is a gesture is a gesture performed according to a single stroke and the segmented gesture is a gesture performed according to an independent sequence of steps or strokes.

The human finger and touch of the touch screen have a variety of different patterns, typically. For example, a single point gesture on the touch screen includes a down event and a following up event performed at an identical location or almost identical location to the location of the object-down event. A dynamic gesture on the touch screen includes a down event and at least one dragging event, following the object-down event, and an up event following the at least one dragging event.

According to some embodiments, a parameter is used to describe a process in which a human finger approaches to the touch screen display to touch the touch screen display and to recede from the touch screen display. This parameter may be at least one function of the distance between the human finger and the touch screen display, the pressure of the human finger applied to the touch screen display, the touch area between the human finger and the touch screen, the voltage between the human finger and the touch screen, the capacitance between the human finger and the touch screen display and physical parameters.

According to some embodiments, when the size of the parameter between the human finger and the touch screen display (for example, the capacitance) is higher than a predetermined threshold value level, the down event is performed. While the parameter is the predetermined threshold value level or higher, with a curser position corresponding to the human finger moved from a position 'A' to a position 'B', the dragging is performed. When the parameter is lower than the threshold value level, the up event is performed.

The transparent display device 100 detects a down event at a first location. A human finger 301 moves from the first location 310 to a second location 320. At this time, the human finger 301 may move in contact with a touch screen display 300 of the transparent display device 100, in a state of the parameter between the human finger 301 and the touch screen display 300 over the predetermined threshold value. When it detects a dragging event at the second location 320, the transparent display device 100 may display a mark 305, which indicates an area including the first and second locations 310 and 320, on the touch screen display 300.

The human finger 301 moves to a third location 330. When the human finger 301 is separated from the touch screen display 300 or the parameter gets less than the predetermined threshold value, the transparent display device 100 detects an up event at the third location 330. when detecting the up event, the transparent display device 100 may display a mark 307 which indicates an area including the first and third locations 310 and 330 and it may detects an object 350 seen via the touch screen display 300 in the area 307. Here, the down event at the first location 310 and the up event at the third location may be recognized as single piece of object selection information, and the object indicated by the input object selection information may be the object 350 having a visual shape located in the area 307.

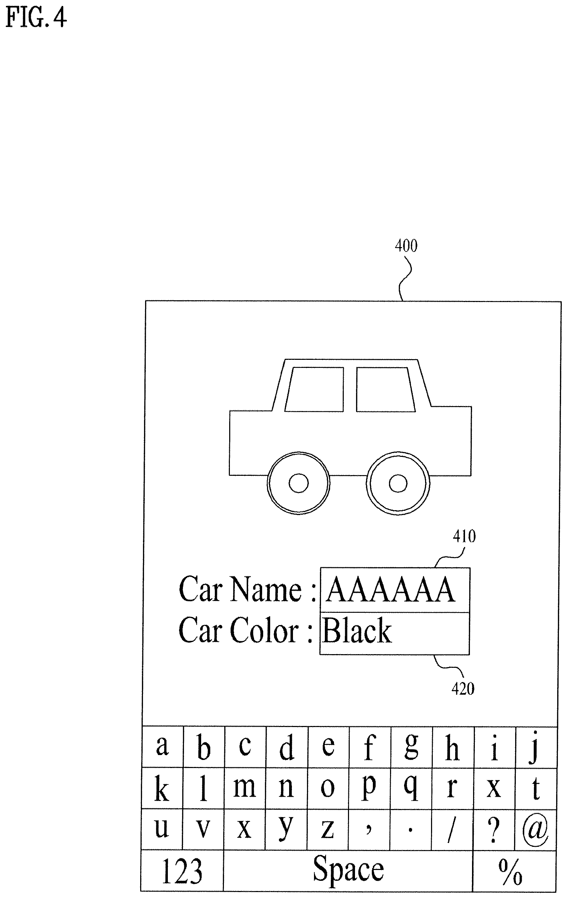

FIG. 4 is a diagram illustrating a method for inputting object selection information according to another embodiment.

In reference to FIG. 4, object selection information may be inputted via Graphic User Interface(GUI). Object selection information may be include at least one of an image, an object name or an object property, and the GUI may provide an interface to receive the input image, object name and object property.

The GUI 400 is an example to input object selection information indicating a specific vehicle. A user may input 'AAAAAA' (model name) of a name of a vehicle to an input box 410 and he or she may input 'Black' (property) of a color of the vehicle. The 'AAAAA' is a name of a object desired to detect and The 'Black' is a property of a object desired to detect.

When receiving the input object selection information via the GUI, the transparent display device 100 stores the input object selection information in a storage and it may detect whether an object indicated by the stored object selection information is visible via the transparent display. The eye direction seen at this time may be a vertical direction with respect to the display of the transparent display device 100, a direction preset by the user or a direction toward the transparent display device 100 from a position of the user's eyes while the object selection information is inputted.

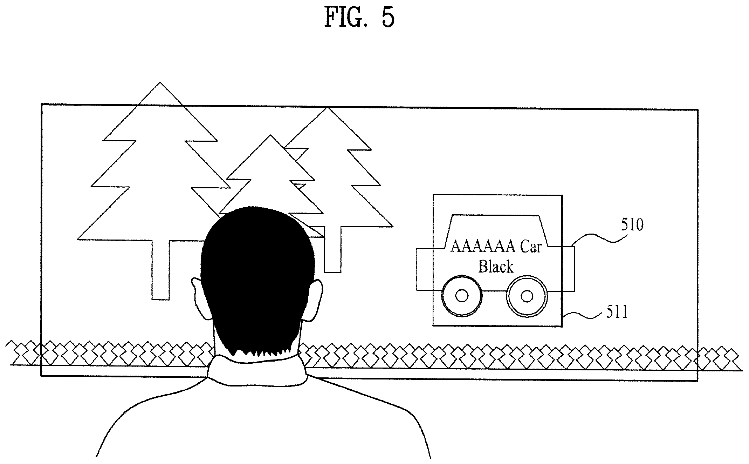

FIG. 5 is a diagram illustrating a situation in which information on an object indicated by object selection information is displayed according to another embodiment.

In reference to FIG. 5, the transparent display device 100 detects whether a vehicle 510 having the model name 'MAMMA' and a color of 'Black' is visible via the transparent display. When detecting the vehicle 510, the transparent display device 100 displays information 511 on the vehicle 510.

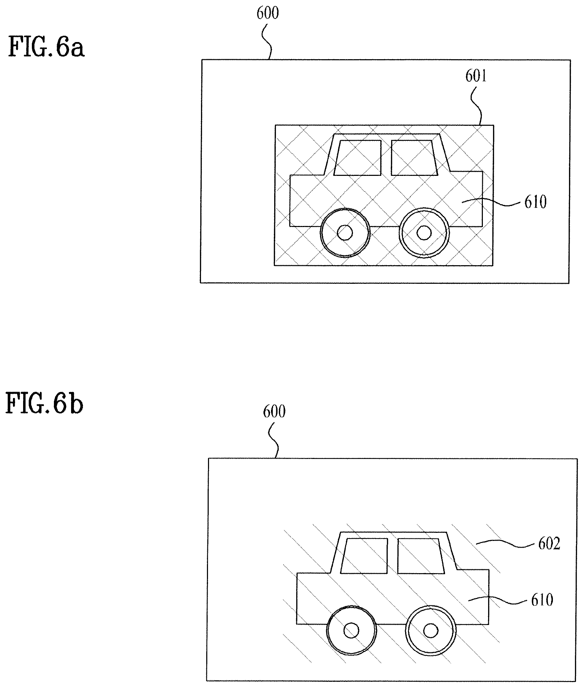

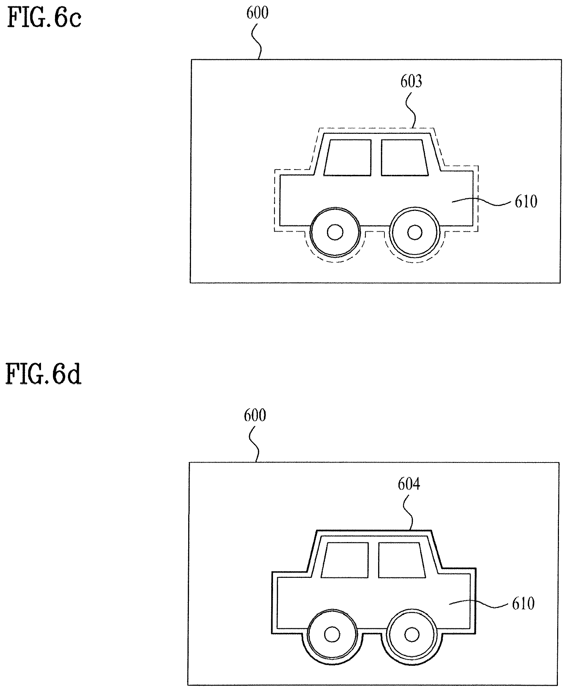

FIGS. 6a to 6d are diagrams illustrating screens displaying a mark to highlight a shape of an object indicated by the object selection information.

In reference to FIGS. 6a to 6d, when detecting an object 610, the transparent display device 100 may display a mark indicating a location of the detected object 610 on a transparent display 600.

According to an embodiment, the transparent display device 100 may display an outline 601 configured to highlight an area having a shape of the detected object 610 located therein on the transparent display 600.

According to another embodiment, the transparent display device 100 may display a mark 602 in the area having the shape of the detected object 610 located therein. Here, the mark 602 may be a slash, a specific color or the mark 602 may be displayed to be on-and-off.

According to a further embodiment, the transparent display device 100 may display a dotted-line along an outline of the shape of the detected object 610. Here, the dotted-line 603 may be displayed to be on-and-off.

According to a still further embodiment, the transparent display device 100 may display a single line 604 along an outline of the shape of the detected object 610. Here, the line 604 may be displayed to be bold, in a specific color or on-and-off.

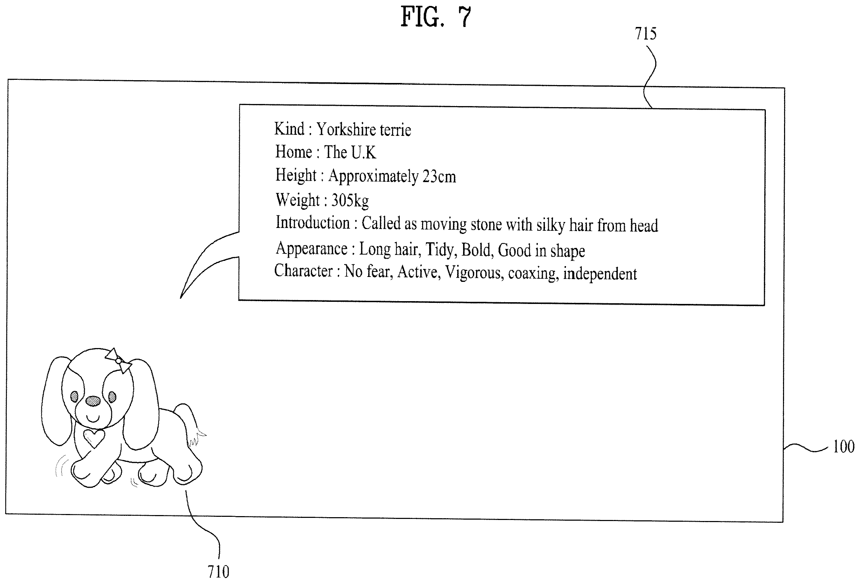

FIG. 7 is a diagram illustrating a screen displaying the information on the detected object.

In reference to FIG. 7, if detecting an animal 710, the transparent display device 100 may display information 715 on the detected animal 710. The transparent display device 100 displays 'Yorkshire Terrier' as object kind information, the United Kingdom as object history information, the maximum 23cm as object appearance information, 3.5kg as object weight information and introduction information, appearance information and characteristic information as detailed explanation of the object.

The transparent display device 100 may search and acquire the information on the detected object directly from a storage, or it may request search to the object information providing server 10 to acquire the information on the detected object.

The transparent display device 100 may transmit a search requesting signal to the object information providing server 10 to request search about the detected object. The transmitted search requesting signal may include an image of the detected object and location information of the detected object. The image of the detected object may be an original image imaged by an imaging image or an image generated by the transparent display device 100 after extracting a region occupied by the object from the original image.

The transparent display device 100 may acquire the location information of the detected object from the location application server 20 and it may compute the location information of the detected object from location information possessed thereby.

The transparent display device 100 may position its location via a radio wave received from a base station 40 based on network-based technology, for example, Cell ID, AOA and TDOA system and the like. In addition, the transparent display device 100 may position its location via a signal received from a satellite 30 based on Handset-based positioning technology, for example, Time Of Arrivals(TOA), Global Positioning System (GPS) and Hybrid positioning system and the like.

The location of the detected object may be positioned with respect to the transparent display device 100 by using image recognition-based technology. The transparent display device 100 may position the location of the object from pictures having the object which are taken by a plurality of photographing devices based on a supervised learning algorithm. Alternatively, the transparent display device 100 may position the location of the object by using Vision VR-based technology. If using the image recognition-based technology to position the location of the object, the transparent display device 100 may detect the location of the object with the accuracy within several centimeters and it may detect the location of the object more accurately.

The location of the detected object with respect to the transparent display device 100 may be positioned by using ultrasonic wave-based technology. The transparent display device 100 transmits an ultrasonic wave toward the recognized eye direction and it may compute the distance of the detected object based on the transmitted ultrasonic wave. Also, the transparent display device 100 may determine an azimuth of the object based on the transmitted direction of the ultrasonic wave. The transparent display device 100 may position the location of the detected object based on the computed distance and the determined azimuth.

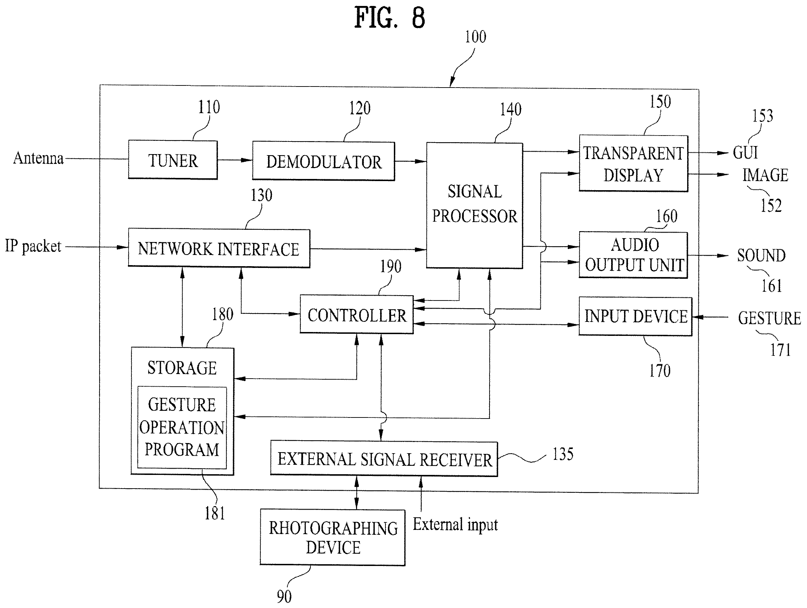

FIG. 8 is a block view illustrating a configuration of a transparent display device according to an exemplary embodiment of the present invention.

In reference to FIG. 8, the transparent display device 100 includes a tuber 110, a demodulator 120, a network interface 130, a signal processor 140, a transparent display 140, an audio output unit 160, an input device 170, a storage 180, a controller 190 and an external signal receiver 135. The transparent display device 100 may be a personal computer system of a desktop, laptop, tablet or handheld computer and the like. Alternatively, the transparent display device 100 may be a mobile terminal, for example, a mobile phone, smart phone, terminal for digital broadcasting, PDA (Personal Digital Assistants, PMP (Portable Multimedia Player), a navigation and the like, or it may be a fixed-type electric appliance, for example, a digital TV and the like.

The tuner 110 selects one corresponding to a channel selected by a user out of RF (Radio Frequency) broadcasting signals received via an antenna and it converts the selected RF broadcasting signal into a middle frequency signal or a baseband video or audio signal. For example, when the selected RF broadcasting signal is a digital broadcasting signal, the tune 110 converts the selected RF broadcasting signal into a digital IF signal (DIF). When it is an analog broadcasting signal, the tuner 110 converts the selected RF broadcasting signal into an analog baseband video or video signal (CVBS SIF). That is, the tuner 110 may process the digital broadcasting signal or analog broadcasting signal. The analog baseband video or audio signal (CVBS SIF) outputted from the tuner 110 may be inputted to the signal processor 140 directly.

In addition, the tuner 110 may be receive a RF broadcasting with a single carrier according to ATSC (Advanced Television System Committee) or a RF broadcasting signal with a plurality of carriers according to DVB (Digital Video Broadcasting).

A transparent display device according to another embodiment of the present invention may include at least two tuners. When the at least two tuners are provided, a second tuner selects one of RF broadcasting signals received via the antenna, which is corresponding to a channel selected by the user, like a first tuner, and the second tuner converts the selected RF broadcasting signal into a middle frequency signal or baseband video or audio signal.

In addition, the second tuner sequentially selects RF broadcasting signals of the received RF signals, which are corresponding to all of the stored broadcasting channels via a channel memory function, and it converts them into the middle frequency signals or baseband video/audio signals. The second tuner may perform conversion of all of the broadcasting channels periodically. Because of that, the transparent display device 100 may provide images of broadcasting signals converted by the first tuner and it may provide a thumbnail type of images converted by the second tuner simultaneously. In this case, the first tuner converts a main RF broadcasting signal selected by the user into a middle frequency signal or baseband video/audio signal, and the second tuner sequentially and periodically selects the other RF broadcasting signals except the main RF broadcasting signal and it converts them into middle frequency signals or baseband video/audio signals.

The demodulator 120 receives a digital IF signal (DIF) converted by the tuner 110 and it performs demodulation of DIF. For example, when the digital IF signal outputted from the tuner 110 is an ATSC system, the demodulator 120 performs 8-VBS (8-Vestigial Side Band) demodulation. Alternatively, when the digital IF signal outputted from the tuner 110 is a DVB system, the demodulator 120 performs COFDMA (Coded Orthogonal Frequency Division Modulation) demodulation.

The demodulator 120 may perform channel decoding. For that, the demodulator 120 may include a trellis decoder, a de-interleaver and a reed Solomon decoder to perform trellis decoding, deinterleaving and reed Solomon decoding.

After performing the demodulation and channel decoding, the demodulator 120 may output a stream signal (TS). At this time, the stream signal may be a signal multiplexed of video, audio and data signals. For example, the stream signal may be MPEG-2 Ts (Transport Stream) multiplexed of MPEG-2 format video signal, dolby AC-3 format audio signal. Specifically, MPEG-2 Ts may include 4 byte header and 184 bite payload.

The stream signal outputted from the demodulator 120 may be inputted to the signal processor 140. After performing demultiplexing and signal processing, the signal processor 140 outputs an image to the transparent display 150 and it outputs a sound to the audio output unit 160.

In case of the digital broadcasting receiver having at least two tuners, the corresponding number of demodulators to the at least two tuners may be provided. The demodulators may be provided independently based on ATSC and DVB system.

The network interface 130 receives packets from the network and transmits the received packets to the network. Via the network, the network interface 130 may send IP packets to transport a search requesting signal to the object information providing server 10 and it may send IP packets to transport the result of the search from the object information providing server 10. In addition, via the network, the network interface 130 may send IP packets to transport a location information requesting signal to the location application server 20 and it may receive IP packets to transport location information from the location application server 20.

Also, the network interface 130 receives IP packets to transport broadcasting data from the service providing server via the network. Here, the broadcasting data includes contents, an update message configured to notify contents updating, metadata, service information, software codes and AN data. The service information may include service information on a real-time broadcasting service and service information on an internet service. Here, the internet service means a service provided via the internet, for example, a Cod (Content's on Demand) service, YouTube service, an information service for weather, news, community information and search, an entertainment service for a game and karaoke, and a communication service for TV mail and TV SMS (Short Message Service). As a result, the digital broadcasting receiver according to the present invention may include a network TV, web TV and broadband TV. Also, the broadcasting service may include an internet service as well as a broadcasting service provided via terrestrial, satellite and cable.

The controller 190 implements command and it performs an operation related to the transparent display device 100. For example, the controller 190 may control input and output and receiving and processing of data between components of the transparent display device 100, using a command searched in the storage 180. The controller 190 may be represented on a single chip, a plurality of chips or a plurality of electric parts. For example, a variety of architectures including an exclusive or embedded processor, a single purpose processor, controller, ASIC and the like may be useable with respect to the controller 190.

The controller 190 implements a computer code together with an operating system and it performs generation and usage of data. The operating system is well-known in the art to which the present invention pertains and description of the operating system will be omitted. For example, the operating system may be Window series OS, Uni, Linux, Palm OS, DOS, Android and Macintosh and the like. The operating system, another computer code and data may exist in the storage connected with the controller 190.

Typically, the storage 180 provides storage for program codes and data used by the transparent display device 100. For example, the storage 180 may be represented to be a ROM (Read only Memory), RAM (Random Access Memory), hard-disc drive. The program codes and data may exist in a separable storage medium or they may be loaded or installed on the transparent display device 100. Here, the separable storage medium includes a CD-ROM, PC-CARD, memory card, floppy disc, magnetic tape and network component.

The transparent display 150 may put into operation, connected with the controller 190. The transparent display 150 may be represented to be an organic light emitting panel or plasma panel.

The transparent display 150 may display a graphic user interface (GUI) 153 configured to provide an easy interface usable between the user of the transparent display device and the operating system or a predetermined application implemented on the operating system. The GUI 153 represents a program, a file and operation options as graphic image. The graphic image may include a window, field, a dialog box, menu, icon, button, curser and scroll bar. Such images may be aligned in a layout defined in advance or they may be generated dynamically to help the user's specific handling. During the operation, the user may select and enable the image to start functions and works related to the variety of graphic images. For example, the user may select a button to implement opening, closing, minimizing and maximizing of a window or an icon to start a specific program.

The input device 170 may be a touch screen disposed on or in front of the transparent display 150. The touch screen may be integral with the transparent display 150 or an independent element. If it is formed integrally with the transparent display 150, the touch screen may be named as touch screen display. When the touch screen is disposed in front of the transparent display 150, the user may operate the GUI 153 directly. For example, the user may place only his or her finger on an object which will be controlled and there is no one-to-one relation on a touch pad.

The touch pad is placed on another plane, separated from the transparent display 150. For example, the transparent display 150 is typically located on a vertical plane and the touch pad is located in a horizontal plane. This allows usage of the touch pad less intuitive and it is quite difficult, compared with the touch screen. In addition to the touch screen, the input device 170 may be a multipoint input device.

The controller 190 may recognize a gesture 171 applied to the input device 170 and it may control the transparent display device 100 based on this gesture 171. Here, the gesture may be defined as predetermined interaction with the input device 170, which is mapped onto at least one specific computing operation. The gesture 171 may be generated by a variety of human fingers, specifically, motion of human fingers. Alternatively, the gesture may be generated by a stylus.

The input device receives the gesture 171 and the controller 190 implements commands configured to perform operations related to the gesture 171. Moreover, the storage 180 may include a gesture operation program 181 which may be a part of the operating system or auxiliary application. The gesture operation program 181 includes a series of commands to recognize generation of the gesture 171 and/or to instruct which step has to be taken in response to the gesture 171 to at least one software agent.

When the user generates one or more gestures, the input device 170 transports gesture information to the controller 190. Using a command transported from the storage 180, specifically, the gesture operation program 181, the controller 190 translates the gesture and it controls each component of the transparent display device such as the storage 180, the transparent display 150, the audio output unit 160, the signal processor 140, the network interface 130 and the input device. The gesture 171 may be detected as command for performing operation of an application stored in the storage 180, for modifying the GUI object displayed on the transparent display 150, for modifying data stored in the storage 180 and for performing operation of the network interface 130 and the signal processor. For example, such commands may be related to zooming, panning, scrolling, page turning, rotating, size adjusting, image channel changing, content receiving and internet access. In addition, the commands may be related to starting of a specific program, opening of a file or document, menu viewing, selecting, command implementing, log-on an internet site system, allowing of an identified person to have access to a limited area of a computer system, loading of user profile related to user preference arrangement on a wall paper and/or the like.

The controller 190 may detect an object based on object selection information received from the input device 170. If object selection information is a down event or up event, the controller may detect an object having a shape located in a first location having the down event generated therein and a second location having the up event generated therein. Here, the controller 190 may recognize an eye direction of a person toward the transparent display from a photograph received from a photographing device 90. After that, the controller may detect an object seen on an area including the first and second locations. Also, the controller 190 may control acquiring of object information on the detected object and it may control the transparent display 150 to display the acquired object information.

The controller 190 may receive the object selection information from the input device 170 and it may identify whether an object indicated by the received object selection information is seen via the transparent display 150. Here, the controller 190 may compare a current image frame with the former image frame of the photographing device 90, to identify whether a new specific object is photographed. When a new specific object is photographed, the controller 190 may extract an image of the photographed object and it may identify whether the photographed object is an object indicated by the object selection information. The controller 190 may control acquiring of object information by using the photographed image of the object. Also, the controller 190 may compare the photographed image of the object or the acquired object information with the object selection information, to identify whether the photographed object is the object indicated by the object selection information.

If the object indicated by the object selection information is seen, the controller 190 may display a mark instructing an area having a shape of the object located on the transparent display 150. Also, the controller 190 may control the acquiring of object information on the object and it may control the transparent display 150 to display the acquired object information.

The external signal receiver 135 may provide an interface which can connect an external device with the transparent display device 100. Here, the external device may means DVD (Digital Versatile Disk), Bluray, a game unit, camcoder, a computer (notebook) and various kinds of video or audio output units. The transparent display device 100 may control video signals and audio signals received from the external signal receiver 135 to be display and it may store or use a data signal.

The external device may be the photographing device 90. The photographing device 90 may include a plurality of cameras and it may image a person. The photographing device 90 recognizes a face area of the person and it focuses the face area, to zoom-in, and it images the face area. Here, a human hand shape imaged by the photographing device 100 may be recognized as gesture. That is, the controller 190 may implements commands configured to perform operations related to the recognized hand shape.

The photographing device 90 may image a rear object of the transparent display 150. That is, the photographing device 90 may image the object seen via the transparent display 150 in the eye direction of the person according to a control signal of the transparent display device 100. The photographing device may recognize and focus on an object area, and it zooms in to image the object. The object may be imaged by the photographing device 90 in a plurality of difference positions.

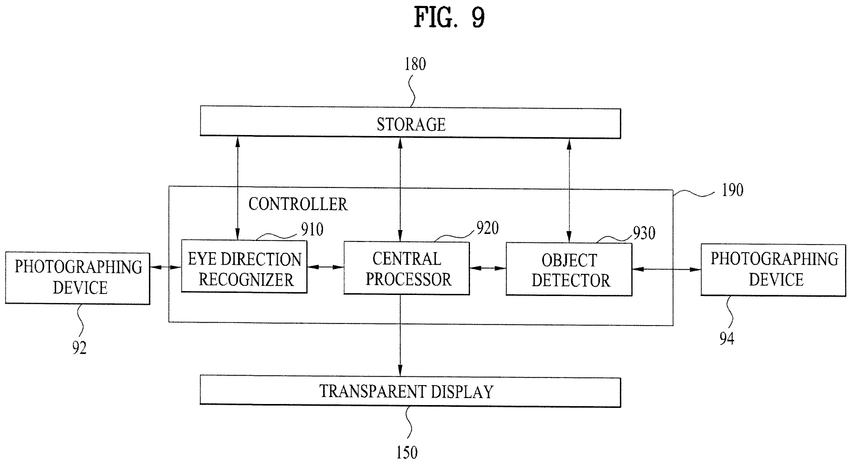

FIG. 9 is a block view illustrating a configuration of a controller according to an exemplary embodiment of the present invention, which composes the transparent display device.

In reference to FIG. 9, a controller 190 may include an eye direction recognizer 910, a central processer 920 and an object detector 930.

The eye direction recognizer 910 may detect a face area from an image frame photographed by a photographing device 92. The eye direction recognizer 910 detects an eye image from the detected face area and it may determine an eye direction by using the detected eye image.

According to an embodiment to determine the eye direction, the eye direction recognizer 910 computes a difference between each of stored eye images and the detected eye image, and it may select an eye image having the smallest difference with the detected eye image. The eye direction recognizer 910 may determine an eye direction indicated by eye direction information mapped onto the selected eye image to be an eye direction of the detected eye image.

The central processor 920 may detect a hand area from the image frame photographed by the photographing device 92. The central processor 920 compares each of stored hand shapes with the detected hand area, and it may select one of the stored hand shapes which is identical to a hand shape displayed in the detected hand area. The central processor 920 may implement a command instructing to perform an operation related to the selected hand shape.

The object detector 930 controls motion of a focus of a photographing device 94 toward the object indicated by the object selection information and it controls imaging of the photographing device 94.

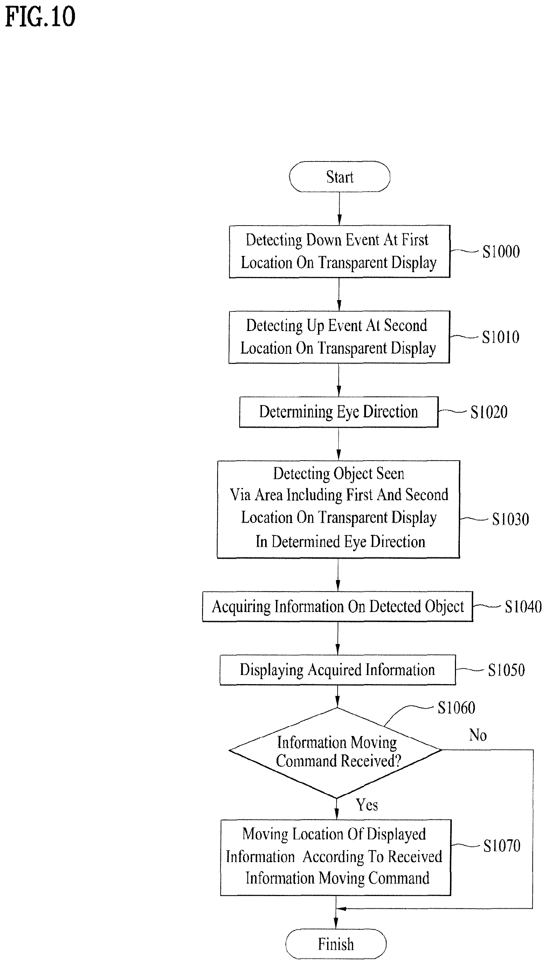

FIG. 10 is a flowchart illustrating a process of a method for detecting an object according to an exemplary embodiment of the present invention.

In reference to FIG. 10, the central processor 920 detects a down event at a first location on the transparent display 150 (S1000).

The central processor 920 detects an up event at a second location on the transparent display 150 (S1010).

The eye direction recognizer 910 determines an eye direction (S1020). Here, the eye direction recognizer 910 may determine a direction toward an area including the first and second locations in a space having a person located therein as eye direction.

The object detector 930 detects an object seen via the area including the first and second locations on the transparent display 150 in the eye direction determined by the eye direction recognizer 910 (S1030). Here, the object may include at least one of a person, animal, thing, vehicle, building or natural thing. According to another embodiment, the object may be an object seen via the area including the first and second locations on the transparent display 150 in a vertical direction with respect to the transparent display 150.

The central processor 920 controls acquirement of information on the detected object (S1040). Here, the object information, which is the information on the object, may include at least one of an object name, object kind information, object history information, object appearance information, object weight information, location information of the object or detailed explanation of the object.

Before acquiring the information on the object, the central processor 920 may compute location information of the detected object. Then, the central processor may control the computed location information to be displayed and it may use the computed location information to acquire the information on the detected object. Here, the central processor 920 may acquire the location information of the detected object from the location application server 20 or from its location information. The central processor 920 may position the location of the transparent display device 100 via an electromagnetic wave received from the base station 40 by using network-based technology such as Cell ID, AOA, TDOA and the like. The central processor 920 may position its location via a signal received from a satellite 30 by using Handset-based positioning technology such as Time Of Arrivals (TOA) system, Global Positioning System (GPS) and Hybrid positioning system. Alternatively, the central processor 920 may position the location of the detected object with respect to the display device 100 by using image recognition-based technology or ultrasonic wave-based technology.

The transparent display 150 displays the acquired object information (S1050). Here, the object information may be displayed together with the screen shown in FIGS. 2 and 7.

The central processor 920 identifies whether an information moving command is received (S1060). Here, the information moving command may be a command generated by a gesture recognized by a hand shape included in the image frame imaged by the photographing device 92, or it may be a command generated by a dynamic gesture recognized by the down event, the dragging event and the up event.

When the information moving command is received, the central processor 920 controls the position of information displayed on the transparent display 150 to move based on the received information moving command (S1070).

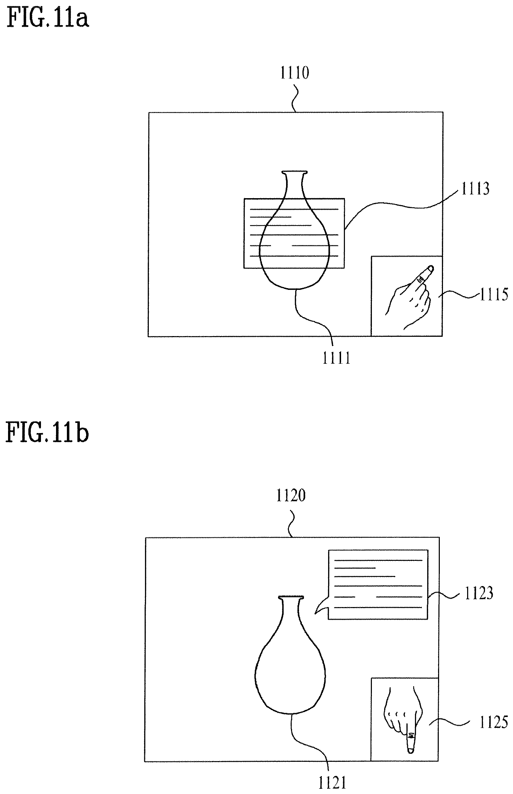

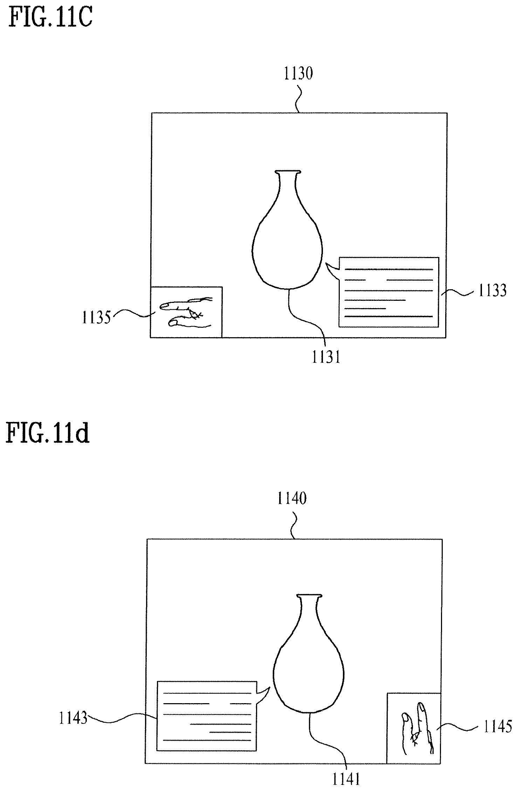

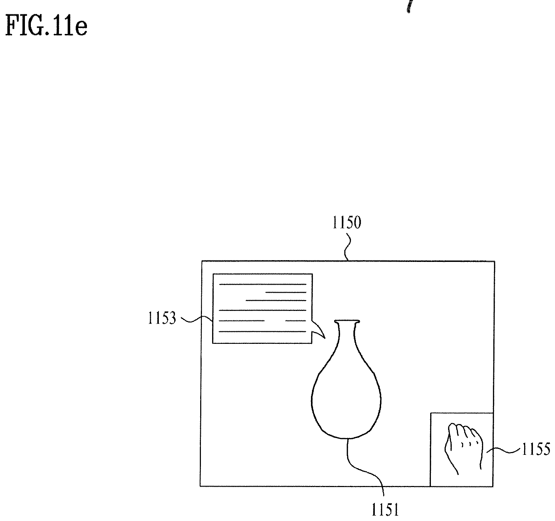

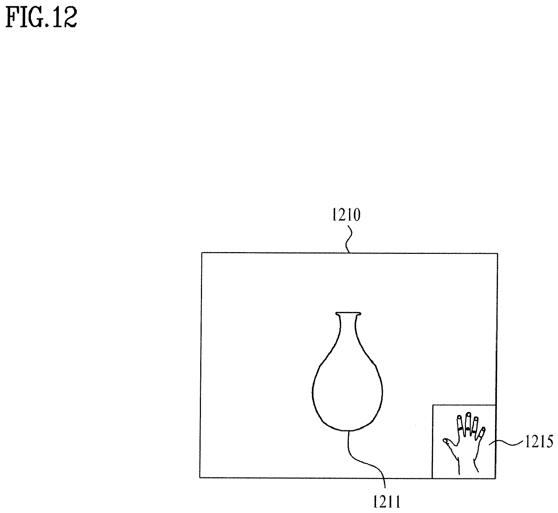

FIGS. 11 a to 11 are diagrams illustrating screens displaying information on the detected object and the recognized gesture. FIG. 12 is a diagram illustrating a screen displaying a gesture requesting to display information on the detected object.

In reference to FIGS. 11a to 11e, object information 1113 on an object 1111 detected on a screen 1110 is located in an area in which an image of the detected object 1111 is located. When a gesture 1115 is recognized on the displayed screen 1110, the screen 1110 is transited into a screen 1120. The recognized gesture 1115 may be displayed on the screen or it may disappear from the screen when a command related to the gesture 1115 is performed. According to an embodiment, the recognized gesture 1115 may not be displayed on the screen.

The object information 1113 on the screen 1120 is moved according to a direction indicated by a human finger of the gesture 1115, to be displayed in an area 1123. When a gesture 1125 is recognized on the displayed screen 1130, the screen 1120 is transited into a screen 1130.

Object information 1123 on the screen 1130 is moved according to a direction indicated by a human finger of the gesture 1125, to be displayed in an area 1133. When a gesture 1135 is recognized on the displayed screen 1130, the screen 1130 is transited into a screen 1140.

Object information 1133 on the screen 1140 is moved according to a direction indicated by a human finger of the gesture 1135, to be displayed on an area 1143. When a gesture 1145 is recognized on the displayed screen 1140, the screen 1140 is transited into a screen 1150.

Object information 1143 on the screen 1150 is moved according to a direction indicated by a human finger of the gesture 1145, to be displayed on an area 1153. When a gesture 1155 is recognized on the displayed screen 1150, the screen 1150 is transited into a screen 1210.

Object information 1153 is not displayed on the screen 1210 according to a display stopping command which is a command related to the gesture 1155. When a gesture 1215 is recognized on the displayed screen 1210, the object information 1153 may be displayed on the screen 1210. At this time, the object information may be displayed on the area 1153 of the former screen 1150 or in an area designated as default.

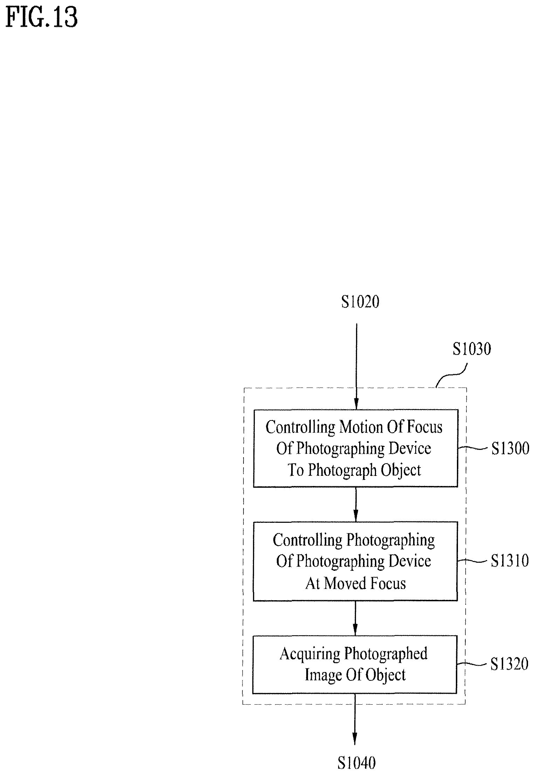

FIG. 13 is a flowchart illustrating a process of a method for detecting an object according to an exemplary embodiment of the present invention.

In reference to FI. 13, the object detector 930 controls a focus of the photographing device to move such that the photographing device may image an object (S1300). Here, the photographing device 94 may be configured of a plurality of cameras and the object detector 930 may control the motion of each camera.

The object detector 930 controls the photographing device 94 to perform imaging at a moved focus (S1310).

The object detector 930 controls the object to receive the image imaged by the photographing device 94 (S1320). The object detector 930 may extract an object image from an image frame outputted from the photographing device 94. In addition, the object detector 930 may compute a position of the object according to the image frame imaged by the photographing device 94.

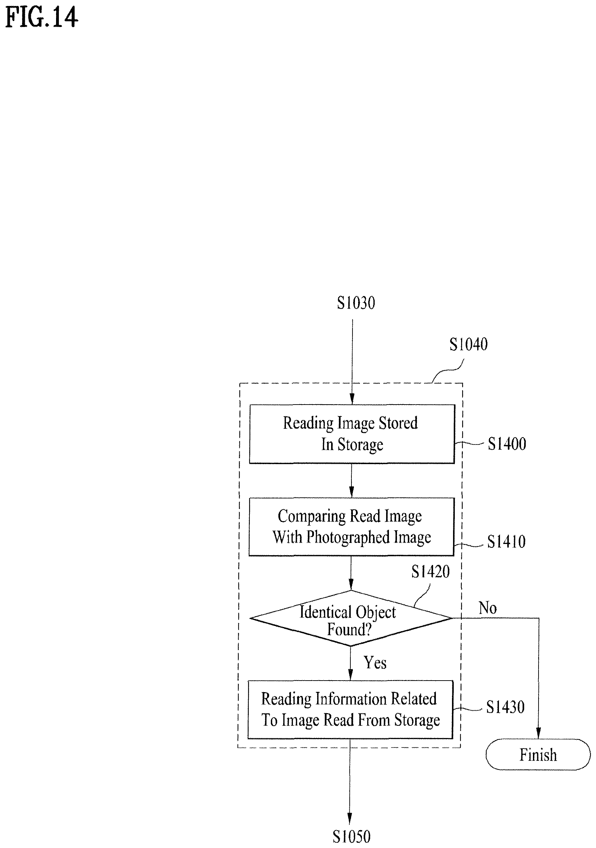

FIG. 14 is a flowchart illustrating a process of a method for acquiring object information according to an exemplary embodiment of the present invention.

In reference to FIG. 14, the central processor 920 reads images stored in the storage 180 (S1400). Here the stored image may be images of objects near the transparent display device 100. The images of objects may be photographed in advance.

The central processor 920 compares the read images with the imaged image (S1410). Here, if an outline of the object included in the read image has an identical pattern to an outline of the object included in the imaged image, the object including in the read images and the object included in the photographed image may be recognized to be identical. In other words, if the objects are matched when patterns of the outlines are controlled to have the same size, the object included in the read image may be recognized to be identical to the object included in the photographed image.

The central processor 920 identifies whether the identical objects are found (S1420).

When the identical objects are found, the central processor 920 reads information related to the image found in the storage 180 (S1430). Here, the read information may be used as information on the object included in the photographed image and the read information may be pre-stored object information of an object near the transparent display device 100.

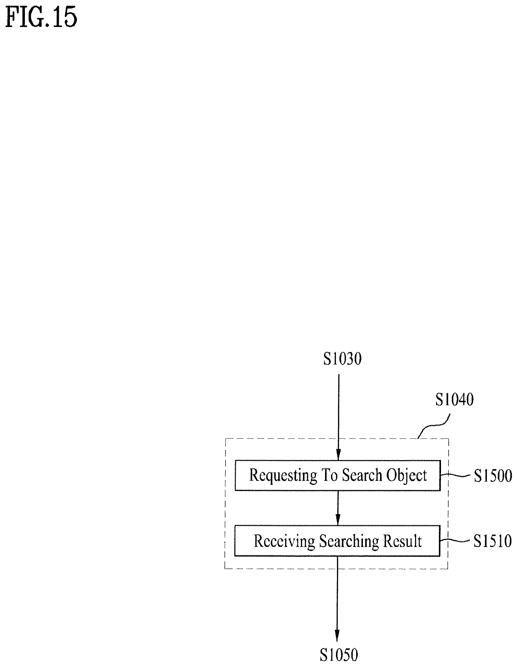

FIG. 15 is a flowchart illustrating a process of a method for acquiring object information according to another embodiment.

In reference to FIG. 15, the central processor 920 requests a server to search information on an object (S1500). Here, the server may be the object information providing server 10. In addition, the central processor 920 may transmit a search requesting signal to the object information providing server 10. The search requesting signal may include an object image and it may include location information of the object.

The central processor 920 controls the receiving of the search result from the server (S1510).

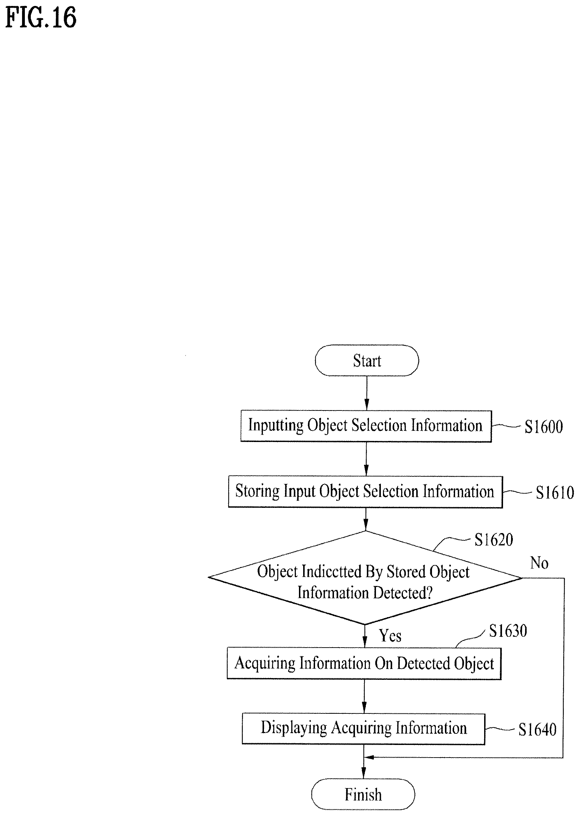

FIG. 16 is a flowchart illustrating a process of a method for detecting an object according to another embodiment of the present invention.

In reference to FIG. 16, the input device 170 receives object selection information (S1600). Here, the object selection information may include at least one of an image, object name, or object property and it may be input via the GUI 400 shown in FIG. 4.

The central processor 920 controls the received object selection information to be stored in the storage 180 (S1610).

The central processor 920 identifies whether an object indicated by the stored object selection information is detected (S1620). Here, the central processor 920 may identify whether the object indicated by the stored object selection information is seen via the transparent display 150. The central processor 920 may identify whether the object is seen in the object image outputted by the object detector 930. The object detector 930 may compare a current image frame with the former image frame of the photographing device 90 and it may identify whether a new specific object is photographed. If a new specific object is photographed, the object detector 930 may control a focus of the photographing device 90 to move to the object, to acquire an image frame having the object imaged therein from the photographing device 90, and it may extract an object image of the object from the acquired image frame.

The controller 190 may control the acquiring of object information by using the object image extracted by the object detector 930. After that, the controller 190 may compare the image of the photographed object or the acquired object information with the object selection information, to identify whether the new photographed object is the object indicated by the object selection information.

When the object indicated by the object selection information is detected, the central processor 920 controls information of the detected object to be acquired (S1630). Here, object information which is the information on the object may include at least one of an object name, object kind information, object history information, object appearance information, object weight information, location information of the object and detailed explanation of an object. Specific process of the step S1630 may be performed according to the process of acquiring the object information shown in FIGS. 14 or 15.

Before acquiring the information on the object, the central processor 920 may compute location information of the detected object. Then, the central processor 920 may control the computed location information to be displayed and it may use the computed location information to acquire the information on the detected object. Here, the central processor 920 may acquire the location information of the detected object from the location application server 20 or from its location information. The central processor 920 may position the location of the transparent display device 100 via an electromagnetic wave received from the base station 40 by using network-based technology such as Cell ID, AOA, TDOA and the like. The central processor 920 may position its location via a signal received from a satellite 30 by using Handset-based positioning technology such as Time Of Arrivals (TOA) system, Global Positioning System (GPS) and Hybrid positioning system. Alternatively, the central processor 920 may position the location of the detected object with respect to the display device 100 by using image recognition-based technology or ultrasonic wave-based technology.

The transparent display 150 displays the acquired object information (S1640). Here, the object information may be displayed together with the screen shown in FIGS. 5 and 7. Also, the central processor 920 may control a mark configured to indicate an area having a shape of the detected object is located on the transparent display to be displayed.

Although not shown, the method for detecting an object of FIG. 16 may further include steps S1060 and S1070 of the method for detecting the object of FIG. 10.

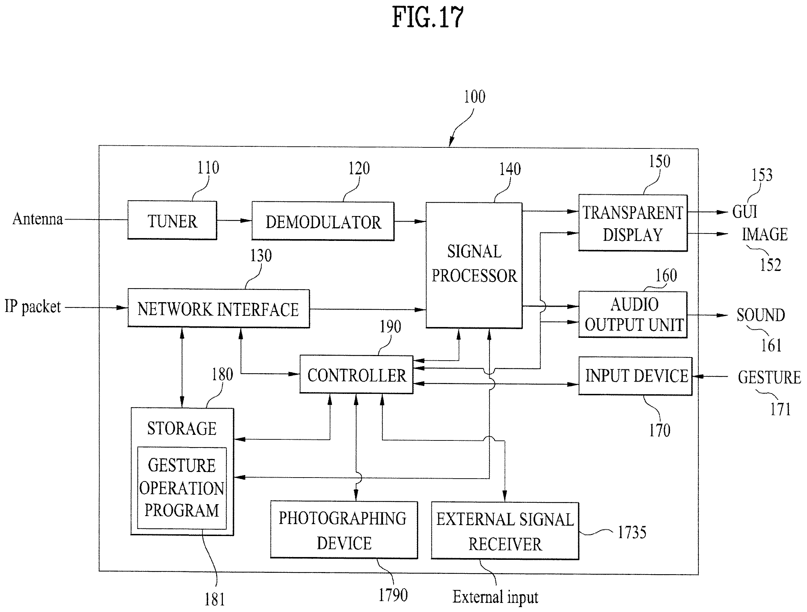

FIG. 17 is a block view illustrating a configuration of a transparent display device according to another embodiment of the present invention.

A transparent display device 100 of FIG. 17 includes a tuner 110, a demodulator 120, a network interface 130, a signal processor 140, a transparent display 150, an audio output unit 160, an input device 170, a storage 180, a controller 190, an external signal receiver 1735 and a photographing device 1790. The controller 190 controls the motion, focus, zoom-in and zoom-out and imaging of the photographing device 1790. The photographing device 1790 images a rear object seen via the transparent display 150 and a person located adjacent to the transparent display 150 according to the control of the controller. The photographing device 1790 may include a plurality of cameras.

The transparent display device 100 of FIG. 17 includes the photographing device 1790, different from the transparent display device 100 of FIG. 8. The other elements of the transparent display device 100 of FIG. 17 are corresponding to those of the transparent display device 100 of FIG. 8, respectively, and detailed description of the other elements will be omitted.

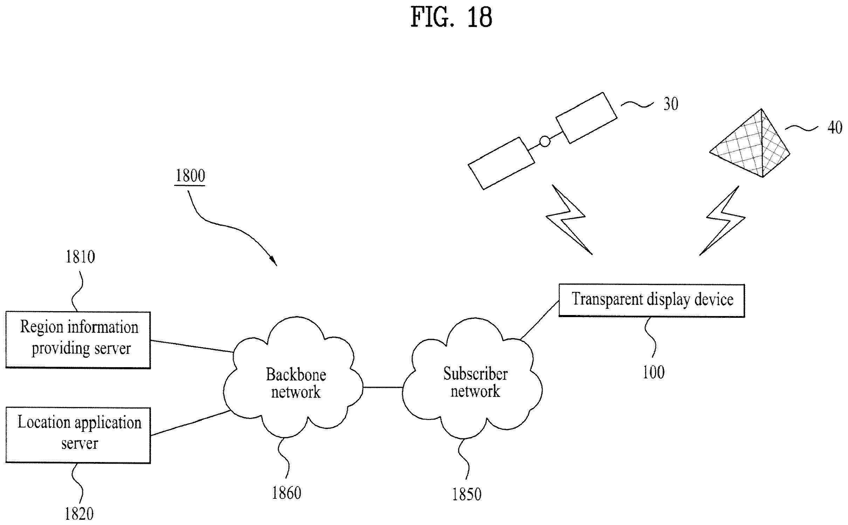

FIG. 18 is a diagram illustrating a configuration of a region information providing system according to an exemplary embodiment of the present invention.

In reference to FIG. 18, a region information providing system 1800 according to the embodiment of the present invention includes a region information providing server 1810, a location application server 1820, networks 1850 and 1860 and a transparent display device 100. Here, the region information providing server 1810 may further perform the function of the object information providing server 10. Also, the object information providing server 10 shown in FIG. 1 may further perform a function of the region information providing server 1810.

The region information server 1810 may store region image, location information, information on region, related information relating the region image with the information on the region, and related information relating the location information with the information on the region. Also, the information on the region may include at least one of a region name, point information on each of points included in the region, a map of the region or region introduction. The information on the region may be referenced to as 'region information' and the region image may be an image of a region.

The related information may be information mapping information onto information, for example, a name of a table in a relation database system. The region information providing server 1810 may search region information mapped onto a specific region image via related information, and it may search region information mapped onto location information via related information.

The region information providing server 1810 may receive a search requesting signal from the transparent display device 100. Here, the search requesting signal may include an image and location information of a detected region. The image of the detected region may be a photograph imaged by the transparent display device 100 or a region image extracted from the imaged photographs.

When receiving a search requesting signal including an image of a detected region from the transparent display device 100, the region information providing server 1810 may recognize a corresponding region from the received image and it may search information on the recognized region. After that, the region information providing server 1810 may transmit the searched information on the region to the transparent display 100. Here, the region information providing server 1810 may recognize the region via a comparison process between the received image and the stored region images. In other words, the region information providing server 1810 figures out an identical or the most similar one to the received image out of the stored images, and it searches information on the recognized region by using the figured out region image and the stored related-information.

When receiving a search requesting signal including location information on a detected region from the transparent display device 100, the region information providing server 1810 may determine a region mapped onto the received location information and it may search information on the determined region. After that, the region information providing server 1810 may transmit the searched information on the region to the transparent display device 100. Here, the region information providing server 1810 may search information on the determined region by using the received location information and the stored related-information.

When receiving a search requesting signal including an image and location information of a detected region from the transparent display device 100, the region information providing server 1810 may recognize a corresponding region based on the received region image and location information, and it may search information on the recognized region. After that, the region information providing server 1810 may transmit the searched information on the region to the transparent display device 100. Here, the region information providing server 1810 may detect region information corresponding to the region information mapped onto the received location information, out of multiple region information mapped onto region images, as information on the recognized region.

The location application server 1820 may provide Location Based Service (LBS) to the transparent display device 100. The location application server 1820 may provide location information on a specific region and a map and geographical information of a specific location to the transparent display device 100. Also, the location application server 1820 may provide information on acquaintances located in a specific region to the transparent display device 100. Here, the location application server 1820 may be corresponding to the location application server 20 shown in FIG. 1 and it may perform the function of the location application server 20 shown in FIG. 1. Reversely, the location application server 20 shown in FIG. 1 may perform the function of the location application server 1820 shown in FIG. 18.

The region information providing server 1810, the location application server 1820 and the transparent display device 100 may be connected with each other via a network. The network may be an internet or intranet, BCN (Broadband Convergence Network) and nBCN (Ultra Broadband Convergence Network).

The network may be configured of a backbone network 1860 and a subscriber network 1850. The backbone network 1860 may be one or combination of one or combination of two out of X.25 network, Frame Relay network, ATM network, Multi Protocol Label Switching (MPLS) network and Generalized Multi Protocol Label Switching network (GMPLS). The subscriber network 50 may be one of Fiber to The Home (FTTH), Asymmetric Digital Subscriber Line (ADSL), Cable network, Wireless LAN (IEEE 802.11B, IEEE 802.11A, IEEE 802.11G and IEEE 802.11N), Wireless Broadband (WIBro), Wimax and High Speed Downlink Packet Access (HSDPA). The transparent display device 100 may be connected with the subscriber network 1850.

The transparent display device 100 selects an area of a background seen via a transparent display based on input region selection information, and it may display an image of the selected area and at least one menu on the transparent display. In addition, when one of the displayed menus is selected, the transparent display device 100 may display a screen related to the selected menu. Here, the transparent display device 100 is corresponding to the transparent display device 100 of FIG. 1 and the transparent display device 100 may perform the function of the transparent display device 100 shown in FIG. 1. Reversely, the transparent display device 100 of FIG. 1 may perform the function of the transparent display device of FIG. 18. That is, the transparent display device 100 may perform the function described in reference to FIGS. 1 to 17 and the function described in reference to FIGS. 18 to 28, in combination.

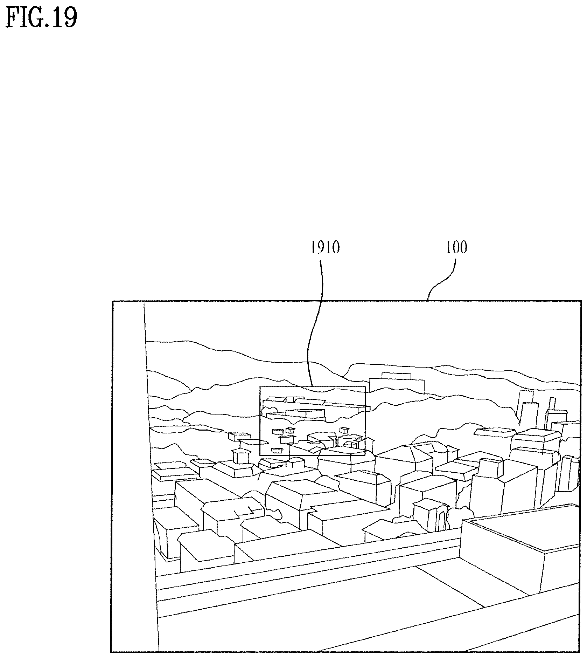

FIG. 19 is a diagram illustrating a background seen via the transparent display.

In reference to FIG. 19, when the user selects an area 1910, the transparent display device 100 may select a background seen via the area 1910 and it may image the selected background to display imaged region image. Here, the selected background may be a background seen via the area 1910 in a vertical direction to the transparent display, or it may be a background seen in the area 1910 in a direction of the user's position.

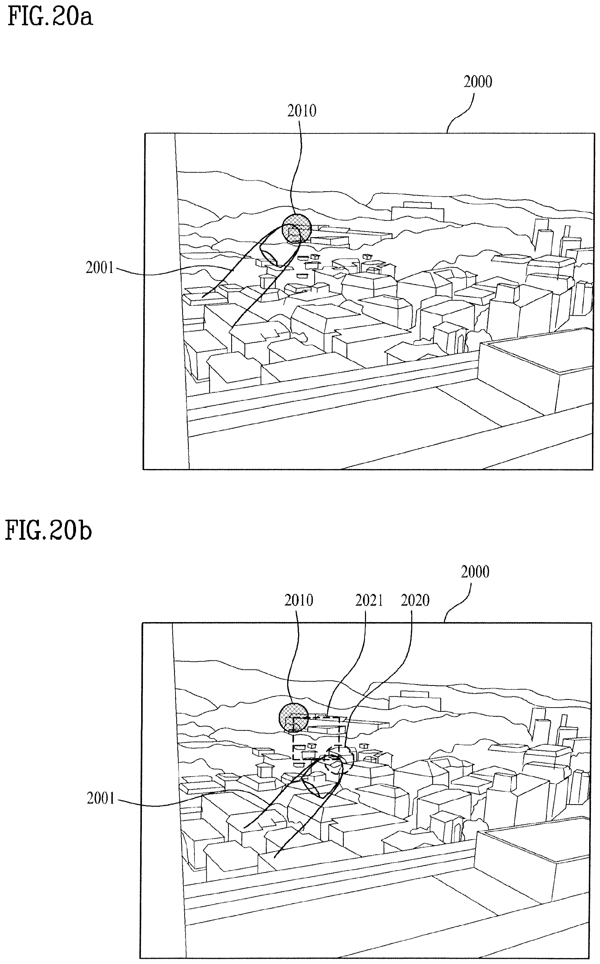

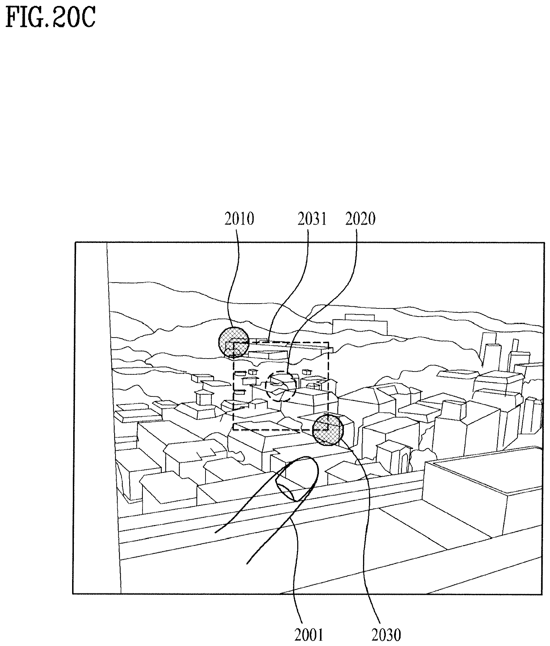

FIGS. 20a to 20c are diagrams illustrating a method for inputting region selection information according to an embodiment.

In reference to FIGS. 20a to 20c, the transparent display device 100 detects a down event at a first location 2010 on a touch screen display 300. A human finger 2001 moves to a second location 2020 from the first location 2010. At this time, the human finger 2001 may move in contact with a touch screen display 2000 of the transparent display device 100, with a parameter between the human finger 2001 and the touch screen display 2000 going higher than a predetermined threshold value. When it detects a dragging event at the second location 2020, the transparent display device 100 may display a mark 2021 indicating an area including the first and second locations 2010 and 2020 on the touch screen display 2000.

The human finger 2001 moves to a third location 2030. When the human finger is separated from the touch screen display 2000 or the parameter getting lower than a predetermined threshold value, the transparent display device 100 detects an up event at the third location 2030. When detecting the up event, the transparent display device 100 may display a mark 2031 indicating an area including the first and third locations 2010 and 2030 and it may select a background seen in the marked area via the touch screen display 2000. Here, the down event at the first location 2010 and the up event at the third location 2030 may be recognized as single piece of region selection information. An area indicated by the input region selection information may be the area including the first and third locations 2010 and 2030. In addition, the area 2031 selected as region selection information may be referenced to as 'crop area' and the transparent display device 100 may select an area of the background seen via the crop area.

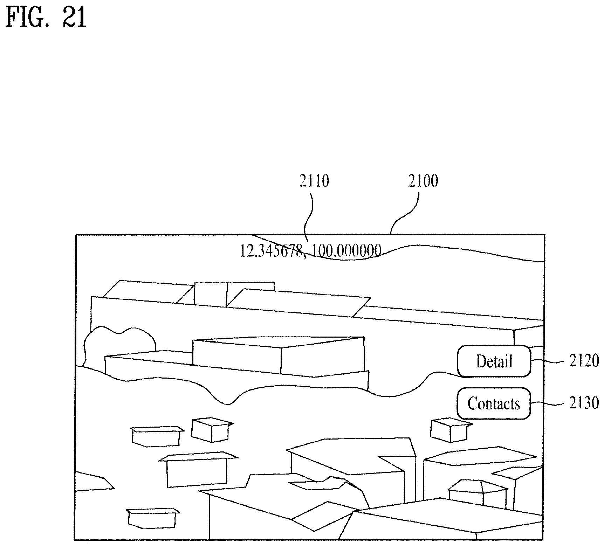

FIG. 21 is a diagram illustrating a screen displaying a photographed image of an area of a background according to an embodiment.

In reference to FIG. 21, the transparent display device 100 may display a photographed image 2100 including a part area of a background. Also, the transparent display device 100 may further display location information 2110 of the imaged background on a screen 400.

The transparent display device 100 may acquire the location information of the imaged region from the location application server 1820 or it may compute the location information from its location information.

The transparent display device 100 may position its location via a radio wave received from a base station 40 based on network-based technology, for example, Cell ID, AOA and TDOA system and the like. In addition, the transparent display device 100 may position its location via a signal received from a satellite 30 based on Handset-based positioning technology, for example, Time Of Arrivals (TOA), Global Positioning System (GPS) and Hybrid positioning system and the like.

The location of the imaged region may be positioned with respect to the transparent display device 100 by using image recognition-based technology. The transparent display device 100 may position the location of the region from photographs including the region, which are taken by a plurality of photographing devices based on a supervised learning algorithm. Alternatively, the transparent display device 100 may position the location of the region by using Vision VR-based technology. If using the image recognition-based technology to position the location of the region, the transparent display device 100 may detect the location of the region with the accuracy within several centimeters and it may detect the location of the region more accurately.

The location of the imaged region with respect to the transparent display device 100 may be positioned by using ultrasonic wave-based technology. The transparent display device 100 transmits an ultrasonic wave toward the region imaging direction and it may compute the distance of the detected region based on the transmitted ultrasonic wave. Also, the transparent display device 100 may determine an azimuth of the region based on the transmitted direction of the ultrasonic wave. The transparent display device 100 may position the location of the imaged region based on the computed distance and the determined azimuth.

The transparent display device 100 may further display at least one of region detail display menu 2120 and connection display menu 2130 on a screen 2100.

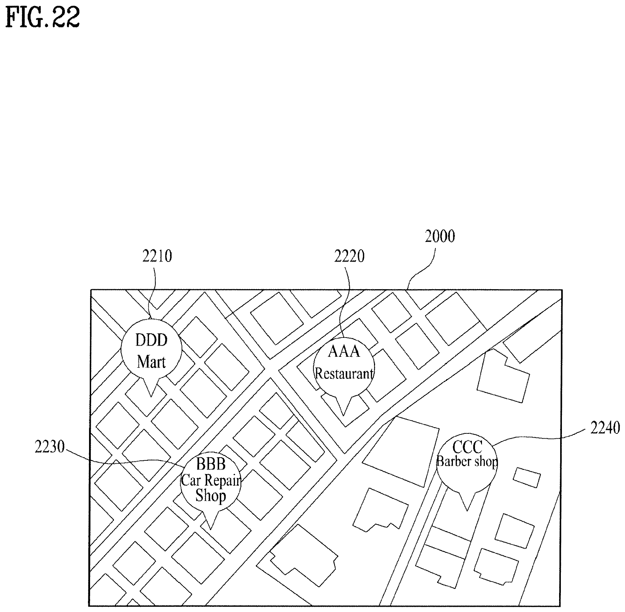

FIG. 22 is a diagram illustrating a screen displaying a map for an area of a background.

In reference to FIG. 22, when the user selects the region detail display menu 2120 on the screen 2100, the transparent display device 100 may display a map 2200 of the imaged region. Also, the transparent display device 100 may further display information display objects 2210, 2220, 2230 and 2240 on the screen 2200 to display region information.

The information display objects may be positioned at points related to information on points to display. An information display object 2210 is configured to display region information related to DDD Mart and it may be located at a point of a map having DDD Mart located therein. An information display object 2220 is configured to display region information related to AAA Restaurant and it may be located at a point of the map 2220 having AAA Restaurant located therein. An information display object 2230 is configured to display region information related to BBB Car Repair Shop and it may be located at a point of the map 2200 having BBB Car Repair Shop located therein. An information display object 2240 is configured to display region information related to CCC Barber Shop and it may be located at a point of the map 2200 having CCC Barber Shop located therein.

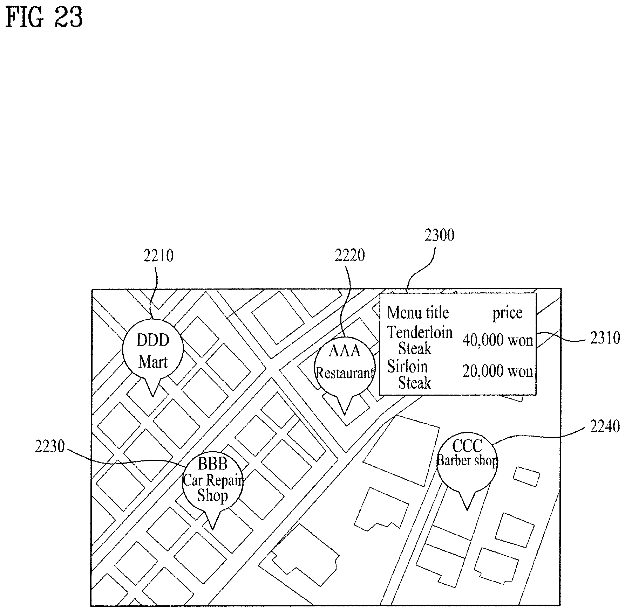

FIG. 23 is a diagram illustrating a screen displaying region information against a background of the map shown in FIG. 5.

In reference to FIG. 23, when a down event area generated in areas having the information display objects 2200, 2220, 2230 and 2240 located therein, the transparent display device 100 may display region information related to the information display object located at the point having the down event generated therein, on the screen. Here, the region information may include at least one of a contact number, the kind or introduction of the region.

When a down event is generated in an area having the information display object 2220 located therein on the screen 2220, the transparent display device 100 may display region information 2310 related on the information display object 2220 on the screen 2300.

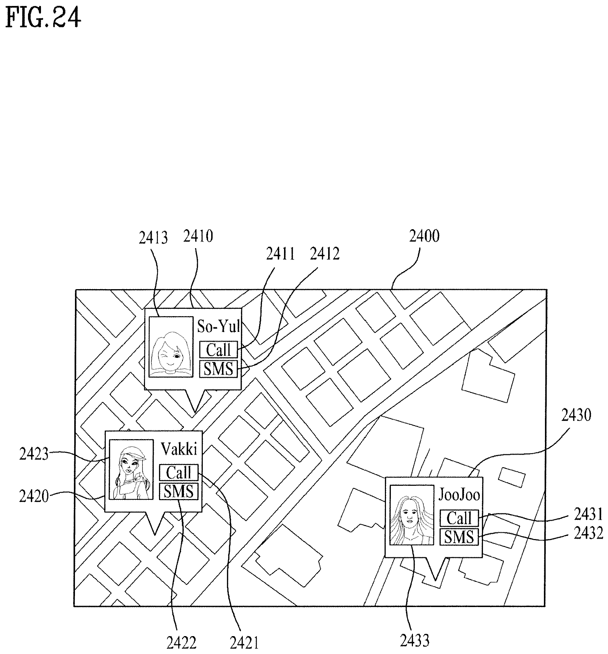

FIG. 24 is a diagram illustrating a screen displaying a map of a part area of a background according to another embodiment of the present invention.

In reference to FIG. 24, when the user selects the connection display menu 2130 on the screen 2100, the transparent display device 100 may display a map 2400 of the imaged region. Also, the transparent display device 100 may further display connection objects 2410, 2420 and 2430 to display region information. Here, the connection objects 2410, 2420 and 2430 indicates specific persons, respectively, and they may include buttons 2411, 2421, and 2431 for phone connection with the indicated persons and buttons 2412, 2422 and 2432 for transmission of text messages. Also, the connection objects 2410, 2420 and 2430 may further include photographs 2413, 2423 and 2433 of the persons indicated by the connection objects 2410, 2430 and 2430, respectively.

When the user clicks one of the buttons 2411, 2432 and 2431, the transparent display device 100 may transmit a signal to request a phone call to a telephone number of a person indicated by the connection object including the clicked button. When the user clicks one of the buttons 2412, 2422 and 2432, the transparent display device 100 may transmit a signal including text messages to a telephone number of a person indicated by the connection object including the clicked button.

The connection objects 2410, 2420 and 2430 may be located at points having the persons indicated thereby located therein. A connection object 2410 indicated by 'So-Yul' may be located at a point on the map having So-Yul located therein and a connection object 2420 indicated by 'Vakki' may be located at a point having on the map Vakki located therein. A connection object 2430 indicated by JooJOo may be located at a point on the map 2400 having JooJoo located therein. Here, location information of a region having a specific person located therein may be received from the location application server 1820.

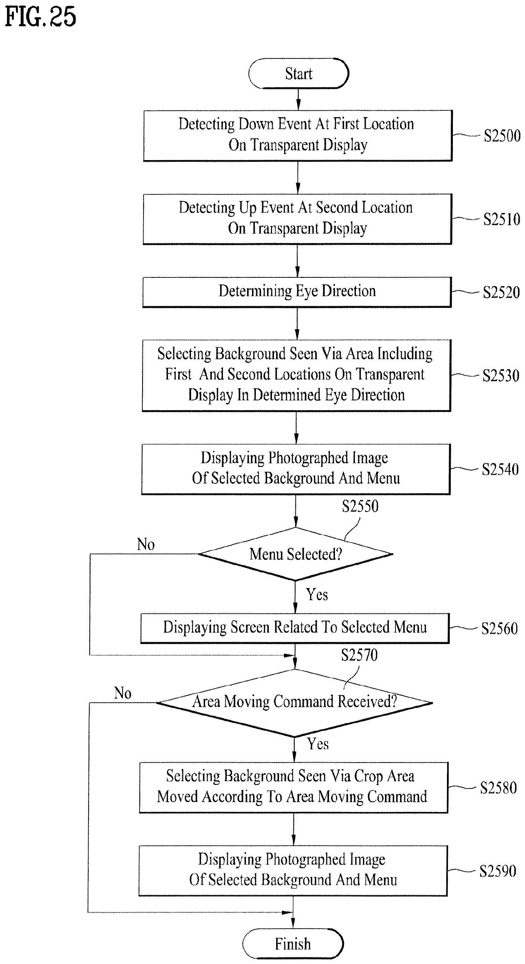

FIG. 25 is a flow chart illustrating a process of a method for providing region information according to an exemplary embodiment of the present invention.

In reference to FIG. 25, the central processor 920 detects a down event at a first location on the transparent display 150 (S2500).

The central processor 920 detects an up event at a second location on the transparent display 150 (S2510).

The eye direction recognizer 910 determines an eye direction (S2520). Here, the eye direction recognizer 910 may determine a direction including the first and second locations in a predetermined space having a person located therein as eye direction. An area including the first and second locations may be referenced to as 'crop area'.

The region detector 930 selects a region seen via the area including the first and second locations on the transparent display 150 in the eye direction determined by the eye direction recognizer 910, and it controls the selected region to be imaged (S2530). Here, according to another embodiment, the region detector 930 may select a region seen via the area including the first and second locations in a vertical direction to the transparent display 150. The object detector 930 may be referenced to as the region detector 930.

The central processor 920 controls a photographed image of the selected region and at least one menu to be displayed (S2540). Here, the displayed screen may be a screen 2100 shown in FIG. 21. In addition, the central processor 920 may compute location information of a detected object. The central processor 920 may control the computed location information to be displayed in the step of S2540 and it may use the computed location information to acquire information on the detected object.

The central processor 920 may acquire location information on the detected object from the location application server 1820 or it may compute the location information on the detected object from its location information. The central processor 920 may position the location of the transparent display device 100 via an electromagnetic wave received from the base station 40 by using network-based technology such as Cell ID, AOA, TDOA and the like. The central processor 920 may position its location via a signal received from a satellite 30 by using Handset-based positioning technology such as Time Of Arrivals (TOA) system, Global Positioning System GPS and Hybrid positioning system. Alternatively, the central processor 920 may position the location of the detected object with respect to the display device 100 by using image recognition-based technology or ultrasonic wave-based technology.

The central processor 920 identifies whether one of the at least one displayed menus is selected (S2550).

If one of the displayed menus is selected, the central processor 920 may control a screen related to the selected menu to be displayed (S2560). Here, the related screen may include a map of a photographed region and information on the photographed region. The related screen may be a screen 2200 shown in FIG. 22 or a screen 2400 shown in FIG. 24. Region information, which is information on a region, may include at least one of a region name, point information on points included in a region, a region map, a region address or region introduction. The region information may be information searched from the information stored in the storage 180 or information received from the region information providing server 10.

The central processor 920 identifies whether an area moving command is received (S2570). Here, the area moving command may be a command generated by a gesture recognized from a hand shape including in the image frame photographed by the photographing device 92, or it may be a command generated by a dynamic gesture recognized by a down event, dragging event and up event.

When receiving the area moving command, the region detector 930 move a crop area according to the area moving command, and it selects a background seen via the moved crop area. After that, the region detector 930 images a region corresponding to the selected background (S2580).

The central processor 920 controls the imaged image of the region and at least one menu to be displayed (S2590).

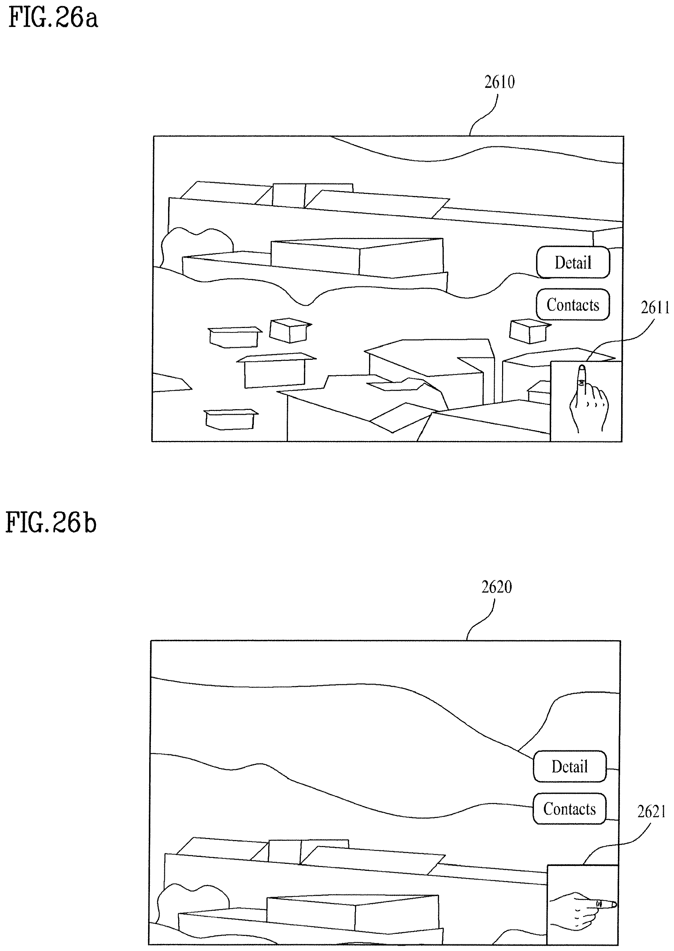

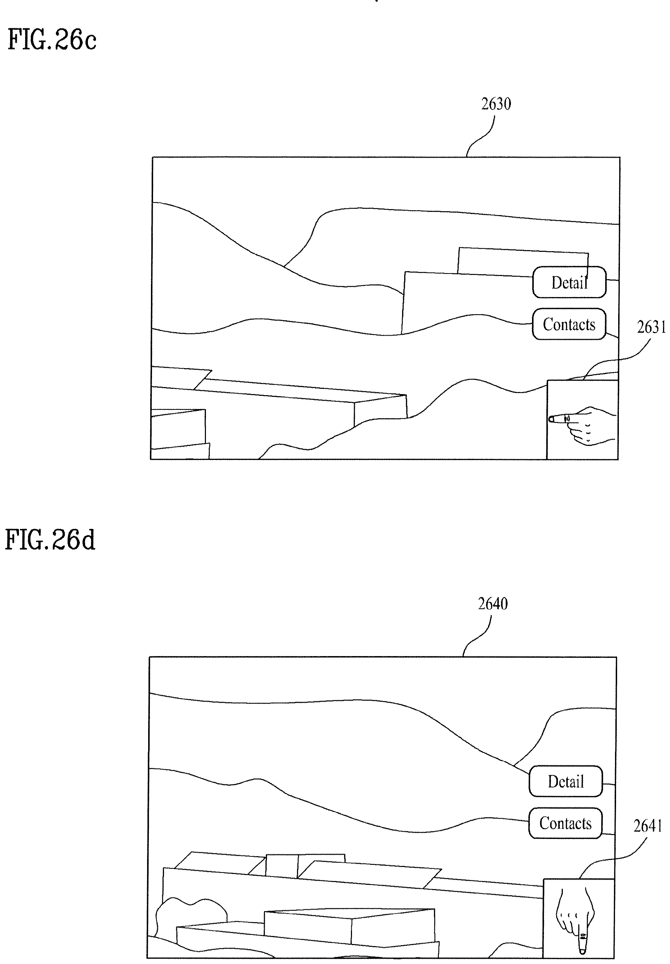

FIGS. 26a to 26d are diagrams illustrating screens displaying an area of the selected background and a recognized gesture.

In reference to FIGS. 26a to 26d, when a gesture 2611 is recognized on a screen 2610 displaying a region image of a region seen in a crop area on the transparent display, the crop area is moved upward according to the gesture 2611 the screen 2610 is transited into a screen 2620 displaying a region image of a region seen in the upward-moved crop area. The recognized gesture 2611 may be displayed on the screen or disappear from the screen when a command related to the gesture 2611 is performed. According to an embodiment, the recognized gesture 2611 may not be displayed on a screen.

When a gesture 2621 is recognized on a screen 2620 displaying a region image of a region seen in a crop area, the crop area is moved rightward along a the recognized gesture 2612 and the screen 2620 is transited into a screen 2630 displaying a region image of a region seen in the rightward moved crop area.

When a gesture 2631 is recognized on a screen 2630 displaying a region image of a region seen in the crop area, the crop area is moved leftward according to the gesture 2631 and the screen 2630 is transited into a screen 2640 displaying a region image of a region seen in the leftward moved crop area.

When a gesture 2641 is recognized on a screen 2640 displaying a region image of a region seen in a crop area, the crop area is moved downward according to the gesture 2641 and the screen 2640 is transited into a screen displaying a region image of a region seen in a downward moved crop area.

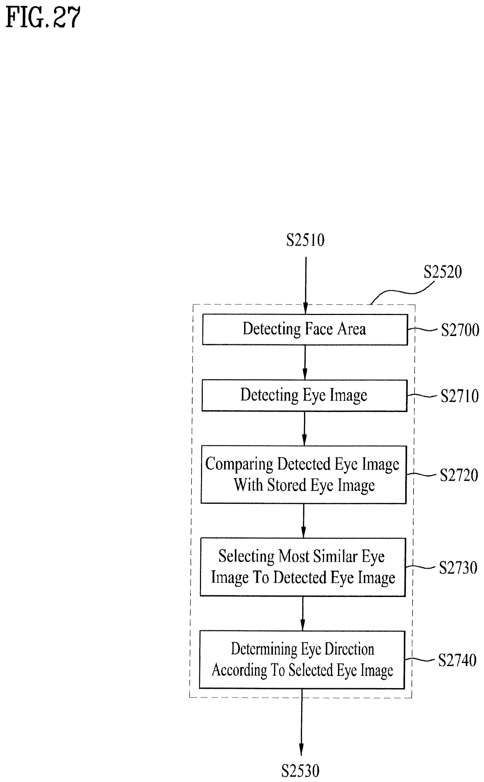

FIG. 27 is a flowchart illustrating a process of a method for recognizing an eye direction according to an exemplary embodiment.

In reference to FIG. 27, the eye direction recognizer 910 detects a face area from a motion picture imaged by a photographing device 92 (S2700).

The eye direction recognizer 910 detects an eye image from the detected face area (S2710).

The eye direction recognizer 910 compares the detected eye image with stored eye images (S2720). Here, the eye direction recognizer 910 may compute a difference between each of the stored eye images and the detected eye image based on the result of the comparison.

The eye direction recognizer 910 selects an eye image out of the stored eye images, which is the most similar to the detected eye image, based on the result of the comparison (S2730). Here, the eye direction recognizer 910 may select an eye image having the smallest difference with the detected eye image out of the stored eye images.

The eye direction recognizer 910 determines an eye direction according to the selected eye image (S2740). Here, the eye direction recognizer 910 may read eye direction information matching the selected eye image and it may determine an eye direction of the detected eye image to be an eye direction indicated by the read eye direction information.

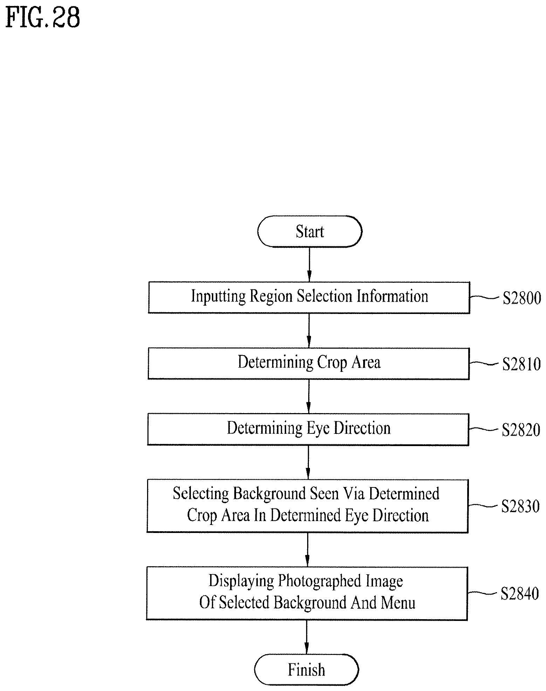

FIG. 28 is a flowchart illustrating a process of a method for providing region information according to another embodiment of the present invention.

In reference to FIG. 28, the input device 170 may receive input region selection information (S2800). Here, the region selection information may be a down event.

The region detector 930 may determine a specific area with respect to a location having the down event generated therein as crop area (S2810). Here, the size of the specific area may be set as default or set by the user.

The eye direction recognizer 910 determines an eye direction (S2820). Here, the eye direction recognizer 910 may determine a direction toward the crop area determined by the region detector 930 at the user's eye position as the eye direction. Alternatively, the eye direction recognizer 910 may determine a direction determined based on the user's the eye image as the eye direction.

The region detector 930 selects a region seen via the crop area in the eye direction determined by the eye direction recognizer 910 and it controls the selected region to be imaged (S2830). Here, according to another embodiment, the region detector 930 may select a region seen via the crop area in a vertical direction with respect to the transparent display 150.

The central processor 920 controls the photographed image of the selected region and at least one menu to be displayed (S2840). Here, a displayed screen may be the screen shown in FIG. 21 (S2100).

Not shown in FIG. 28, the method for providing region information shown in FIG. 29 may further include steps identical to the steps of S2550 to S2580 shown in FIG. 25.

The present invention may be embodied as code readable by a computer in a recording medium readable by a computer. The recording medium includes all kinds of recording devices capable of store data readable by a computer device. For example, the recording medium readable by the computer may be a ROM, RAM, CD-ROM, magnetic tape, floppy disk, optical data storing device, and it may be embodied as a carrier wave type (for example, transmission via internet). The recording medium readable by the computer may be distributed in a computer unit connected via a network and a code readable by the computer in distribution may be stored in the recording medium to be implemented.

It will be apparent to those skilled in the art that various modifications and variations can be made in the present invention. Thus, it is intended that the present invention covers the modifications and variations of this invention provided they come within the scope of the appended claims and their equivalents.

## Claims

1. A method for providing information on an object seen via a transparent display (150), the method comprising:
detecting a down event at a first location (2010), a dragging event at a second location (2020) and an up event at a third location (2030) on the transparent display;
determining an eye direction of a user using a photographed image (2100) of the user in response to detecting the up event;
detecting an object seen via the transparent display in the determined eye direction (S2520) within a partial region including the first, second and third locations of the entirety of the transparent display;
acquiring information on the detected object (610); and
displaying the acquired information on the transparent display.

2. The method of claim 1, wherein a mark to highlight a shape of the detected object (610) is displayed.

3. The method of claim 1, wherein acquiring the information on the detected object (610) comprises:
transmitting to a server (10) a request for searching the information on the detected object; and
receiving a search result from the server,
wherein the information on the detected object includes at least one of an image or location information of the detected object.

4. The method of claim 3, wherein the acquiring the information on the detected object (610) comprises:
searching an object associated with the detected object from a storage (180);
comparing the detected object with a searched object; and
reading and acquiring information of the searched object when the detected object and the searched object are identical, the information of the searched object corresponding to the information on the detected object.

5. The method of claim 1, wherein the detected object (610) comprises at least one of a human (230), an animal (710), a thing, a vehicle (510), a building or a natural thing.

6. The method of claim 1, wherein the information on the detected object (610) comprises at least one of an object name, object kind information, object history information, object appearance information, object weight information, location information of the object or a detailed explanation of the object.

7. The method of claim 1, wherein the displayed information is moved according to a recognized gesture (171).

8. A transparent display device (100), comprising:
a transparent display (150);
an input device (170) configured to receive a gesture (171) performed on the transparent display, wherein the gesture includes a down event at a first location (2010), a dragging event at a second location (2020) and an up event at a third location (2030) on the transparent display;
a photographing device (90) configured to photograph an image of a user; and
a controller (190) configured to detect the gesture, to determine an eye direction of the user using the photographed image (2100) of the user in response to detecting the up event, to detect an object seen via the transparent display in the determined eye direction within a partial region including the first, second and third locations of the entirety of the transparent display, to acquire information on the detected object, and to control the transparent display to display the acquired information,
wherein the photographing device is configured to photograph an image of the object seen via the transparent display in the determined eye direction within the partial region of the entirety of the transparent display and the controller is configured to detect the object using the photographed image of the object.

9. The transparent display device (100) of claim 8, wherein the controller (190) is configured to control the transparent display (150) to display a mark to highlight a shape of the detected object.

10. The transparent display device (100) of claim 8, wherein the controller (190) is configured to transmit to a server (10) a search requesting signal for requesting search of the information on the detected object (610), and to control a search result to be received from the server, and the information on the detected object includes at least one of an image or location information of the detected object.

11. The transparent display device (100) of claim 8, wherein the controller (190) is configured to search an object associated with the detected object from a storage (180), to compare the detected object (610) with a searched object, and to read and acquire information of the searched object when the detected object and the searched object are identical, and the information of the searched object corresponds to the information on the detected object.

## Patentansprüche

1. Verfahren zur Bereitstellung von Informationen über ein Objekt, das über eine transparente Anzeige (150) betrachtet wird, wobei das Verfahren aufweist:
Erfassen eines Nach-Unten-Ereignisses an einem ersten Ort (2010), eines Ziehereignisses an einem zweiten Ort (2020) und eines Nach-Oben-Ereignisses an einem dritten Ort (2030) auf der transparenten Anzeige;
Bestimmen einer Augenrichtung eines Benutzers unter Verwendung eines fotografierten Bilds (2100) des Benutzers ansprechend auf die Erfassung des Nach-Oben-Ereignisses;
Erfassen eines Objekts, das über die transparente Anzeige in der bestimmten Augenrichtung gesehen wird (S2520), innerhalb eines Teilbereichs einschließlich der ersten, zweiten und dritten Orte der Gesamtheit der transparenten Anzeige;
Erlangen von Informationen über das erfasste Objekt (610); und
Anzeigen der erfassten Informationen auf der transparenten Anzeige.

2. Verfahren nach Anspruch 1, wobei eine Markierung zum Hervorheben einer Form des erfassten Objekts angezeigt wird.

3. Verfahren nach Anspruch 1, wobei das Erlangen der Informationen über das erfasste Objekt (610) aufweist:
Übertragen einer Anforderung zum Suchen der Informationen über das erfasste Objekt an einen Server (10); und
Empfangen eines Suchergebnisses von dem Server,
wobei die Informationen über das erfasste Objekt ein Bild und/oder eine Ortsinformation des erfassten Objekts umfassen.

4. Verfahren nach Anspruch 3, wobei das Erfassen der Informationen über das erfasste Objekt aufweist:
Suchen eines Objekts, das zu dem erfassten Objekt gehört, aus einem Speicher (180);
Vergleichen des erfassten Objekts mit einem gesuchten Objekt; und
Lesen und Erlangen von Informationen des gesuchten Objekts, wenn das erfasste Objekt und das gesuchte Objekt identisch sind, wobei die Informationen des gesuchten Objekts den Informationen über das erfasste Objekt entsprechen.

5. Verfahren nach Anspruch 1, wobei das erfasste Objekt (610) einen Menschen (230) und/oder ein Tier (710) und/oder einen Gegenstand und/oder ein Fahrzeug (510) und/oder ein Gebäude und/oder einen natürlichen Gegenstand aufweist.

6. Verfahren nach Anspruch 1, wobei die Informationen über das erfasste Objekt (610) einen Objektnamen und/oder eine Objektartinformation und/oder eine Objekthistorieninformation und/oder eine Information über das Aussehen des Objekts und/oder eine Objektgewichtsinformation und/oder eine Ortsinformation des Objekts und/oder eine detaillierte Erklärung des Objekts aufweist.

7. Verfahren nach Anspruch 1, wobei die angezeigten Informationen gemäß einer erkannten Handbewegung (711) bewegt werden.

8. Transparente Anzeigevorrichtung (100), die aufweist:
eine transparente Anzeige (150);
eine Eingabevorrichtung (170), die aufgebaut ist, um eine Handbewegung (171) aufzunehmen, die auf der transparenten Anzeige durchgeführt wird, wobei die Handbewegung ein Nach-Unten-Ereignis an einem ersten Ort (2010), ein Ziehereignis an einem zweiten Ort (2020) und ein Nach-Oben-Ereignis an einem dritten Ort (2030) auf der transparenten Anzeige umfasst;
eine Fotografiervorrichtung (90), die konfiguriert ist, um ein Bild eines Benutzers zu fotografieren; und
eine Steuerung (190), die konfiguriert ist, um die Handbewegung zu erfassen, um eine Augenrichtung des Benutzers unter Verwendung des fotografierten Bilds (2100) des Benutzers ansprechend auf die Erfassung des Nach-Oben-Ereignisses zu bestimmen, um ein Objekt, das über die transparente Anzeige in der bestimmten Augenrichtung gesehen wird, innerhalb eines Teilbereichs einschließlich der ersten, zweiten und dritten Orte der Gesamtheit der transparenten Anzeige zu erfassen, um Informationen über das erfasste Objekt zu erlangen, und die transparente Anzeige zu steuern, so dass sie die erfassten Informationen anzeigt,
wobei die Fotografiervorrichtung konfiguriert ist, um ein Bild des Objekts zu fotografieren, das über die transparente Anzeige in der bestimmten Augenrichtung innerhalb des Teilbereichs der Gesamtheit der transparenten Anzeige zu sehen ist, und die Steuerung konfiguriert ist, um das Objekt unter Verwendung des fotografierten Bilds des Objekts zu erfassen.

9. Transparente Anzeigevorrichtung (100) nach Anspruch 8, wobei die Steuerung (190) konfiguriert ist, um die transparente Anzeige (150) zu steuern, um eine Markierung zum Hervorheben einer Form des erfassten Objekts anzuzeigen.

10. Transparente Anzeigevorrichtung (100) nach Anspruch 8, wobei die Steuerung (190) konfiguriert ist, um ein Suchanforderungssignal für eine Suchanforderung der Informationen über das erfasste Objekt (610) an einen Server (10) zu übertragen und ein Suchergebnis, das von dem Server empfangen werden soll, zu steuern, und wobei die Informationen über das erfasste Objekt ein Bild und/oder Ortsinformationen des erfassten Objekts umfassen.

11. Transparente Anzeigevorrichtung (100) nach Anspruch 8, wobei die Steuerung (190) konfiguriert ist, um ein Objekt, das zu dem erfassten Objekt gehört, aus einem Speicher (180) zu suchen, das erfasste Objekt (610) mit einem gesuchten Objekt zu vergleichen, und wenn das erfasste Objekt und das gesuchte Objekt identisch sind, Informationen des gesuchten Objekts zu lesen und zu erlangen, und wobei die Informationen des gesuchten Objekts den Informationen über das erfasste Objekt entsprechen.

## Revendications

1. Procédé pour fournir de l'information sur un objet vu par l'intermédiaire d'un afficheur transparent (150), le procédé comprenant :
détecter un événement descendant à un premier emplacement (2010), un événement de glissement à un deuxième emplacement (2020) et d'un événement ascendant à un troisième emplacement (2030) sur l'afficheur transparent ;
déterminer une direction des yeux d'un utilisateur en utilisant une image photographiée (2100) de l'utilisateur en réponse à la détection de l'événement ascendant ;
détecter un objet vu par l'intermédiaire de l'afficheur transparent dans la direction déterminée des yeux (S2520) à l'intérieur d'une région partielle incluant les premier, deuxième et troisième emplacements de la totalité de l'afficheur transparent ;
acquérir de l'information sur l'objet détecté (610) ; et
afficher l'information acquise sur l'afficheur transparent.

2. Procédé selon la revendication 1, dans lequel une marque soulignant une forme de l'objet détecté (610) est affichée.

3. Procédé selon la revendication 1, dans lequel l'acquisition de l'information sur l'objet détecté (610) comprend :
transmettre à un serveur (10) une requête de recherche de l'information sur l'objet détecté ; et
recevoir du serveur un résultat de recherche,
dans lequel l'information sur l'objet détecté inclut au moins un élément parmi une image ou de l'information de localisation de l'objet détecté.

4. Procédé selon la revendication 3, dans lequel l'acquisition de l'information sur l'objet détecté (610) comprend :
rechercher dans une mémoire (180) un objet associé à l'objet détecté ;
comparer l'objet détecté à un objet recherché ; et
lire et acquérir de l'information de l'objet recherché lorsque l'objet détecté et l'objet recherché sont identiques, l'information de l'objet recherché correspondant à l'information sur l'objet détecté.

5. Procédé selon la revendication 1, dans lequel l'objet détecté (610) comprend au moins un objet parmi un humain (230), un animal (710), une chose, un véhicule (510), un bâtiment ou une chose naturelle.

6. Procédé selon la revendication 1, dans lequel l'information sur l'objet détecté (610) comprend au moins un élément parmi un nom d'objet, de l'information de type d'objet, de l'information historique d'objet, de l'information d'apparence d'objet, de l'information de poids d'objet, de l'information de localisation de l'objet ou une explication détaillée de l'objet.

7. Procédé selon la revendication 1, dans lequel l'information affichée est déplacée selon un geste reconnu (171).

8. Dispositif d'affichage transparent (100), comprenant :
un afficheur transparent (150) ;
un dispositif d'entrée (170) configuré pour recevoir un geste (171) effectué sur l'afficheur transparent, dans lequel le geste inclut un événement descendant à un premier emplacement (2010), un événement de glissement à un deuxième emplacement (2020) et un événement ascendant à un troisième emplacement (2030) sur l'afficheur transparent ;
un dispositif de photographie (90) configuré pour photographier une image d'un utilisateur ; et
un contrôleur (190) configuré pour détecter le geste, pour déterminer une direction des yeux de l'utilisateur en utilisant l'image photographiée (2100) de l'utilisateur en réponse à la détection de l'événement ascendant, pour détecter un objet vu par l'intermédiaire de l'afficheur transparent dans la direction déterminée des yeux à l'intérieur d'une région partielle incluant les premier, deuxième et troisième emplacements de la totalité de l'afficheur transparent, pour acquérir de l'information sur l'objet détecté, et pour commander l'afficheur transparent pour afficher l'information acquise,
dans lequel le dispositif de photographie est configuré pour photographier une image de l'objet vu par l'intermédiaire de l'afficheur transparent dans la direction déterminée des yeux à l'intérieur de la région partielle de la totalité de l'afficheur transparent et le dispositif de commande est configuré pour détecter l'objet en utilisant l'image photographiée de l'objet.

9. Dispositif d'affichage transparent (100) selon la revendication 8, dans lequel le dispositif de commande (190) est configuré pour commander l'afficheur transparent (150) pour afficher une marque pour souligner une forme de l'objet détecté.

10. Dispositif d'affichage transparent (100) selon la revendication 8, dans lequel le contrôleur (190) est configuré pour transmettre à un serveur (10) un signal de requête de recherche pour requérir une recherche de l'information sur l'objet détecté (610), et pour commander la réception d'un résultat de recherche en provenance du serveur, et l'information sur l'objet détecté inclut au moins un élément parmi une image ou de l'information de localisation de l'objet détecté.

11. Dispositif d'affichage transparent (100) selon la revendication 8, dans lequel le contrôleur (190) est configuré pour rechercher dans une mémoire (180) un objet associé à l'objet détecté, pour comparer l'objet détecté (610) à un objet recherché, et pour lire et acquérir de l'information de l'objet recherché lorsque l'objet détecté et l'objet recherché sont identiques, et l'information de l'objet recherché correspond à l'information sur l'objet détecté.
